(19) Europäisches Patentamt
European Patent Office
Office européen des brevets

(11) **EP 4 179 308 B1**

(12) **EUROPEAN PATENT SPECIFICATION**

(45) Date of publication and mention
of the grant of the patent:
**23.04.2025 Bulletin 2025/17**

(21) Application number: **21746192.0**

(22) Date of filing: **12.07.2021**

(51) International Patent Classification (IPC):
**G01N 29/036** $^{(2006.01)}$    **B01L 3/00** $^{(2006.01)}$
**G01N 29/22** $^{(2006.01)}$

(52) Cooperative Patent Classification (CPC):
**G01N 29/036; B01L 3/502715; B01L 3/502761;
G01N 15/1433; G01N 29/222;** B01L 2200/0652;
B01L 2200/0668; B01L 2300/0816;
B01L 2400/0436; B01L 2400/0439;
G01N 2015/1027; G01N 2291/02466;
G01N 2291/02809

(86) International application number:
**PCT/NL2021/050440**

(87) International publication number:
**WO 2022/010356 (13.01.2022 Gazette 2022/02)**

(54) **METHOD FOR MANIPULATING A PARTICLE**

VERFAHREN ZUR MANIPULATION EINES PARTIKELS

PROCÉDÉ POUR LA MANIPULATION D'UNE PARTICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.07.2020 NL 2026048**

(43) Date of publication of application:
**17.05.2023 Bulletin 2023/20**

(73) Proprietor: **LUMICKS CA Holding B.V.
1105 AG Amsterdam (NL)**

(72) Inventors:
• **OSWALD, Felix**
  **1059 CH Amsterdam (NL)**
• **KAMSMA, Douwe**
  **1059 CH Amsterdam (NL)**
• **FRANKLIN, Amanda Caroline**
  **1059 CH Amsterdam (NL)**

(74) Representative: **De Vries & Metman
Overschiestraat 180
1062 XK Amsterdam (NL)**

(56) References cited:
EP-A1- 3 614 136          WO-A1-97/26512
WO-A2-2018/083193     US-A1- 2010 259 362

• **GREGOR THALHAMMER ET AL: "Acoustic force
mapping in a hybrid acoustic-optical
micromanipulation device supporting high
resolution optical imaging", LAB ON A CHIP, vol.
16, no. 8, 21 April 2016 (2016-04-21), pages 1523 -
1532, XP055292714, ISSN: 1473-0197, DOI:
10.1039/C6LC00182C**
• **PETHRICK R A ET AL: "An ultrasonic resonance
technique operating in the frequency range 200
kHz to 30 MHz and designed for chemical
relaxation studies", ULTRASONICS, IPC
SCIENCE AND TECHNOLOGY PRESS LTD.
GUILDFORD, GB, vol. 10, no. 5, 1 September
1972 (1972-09-01), pages 228 - 230,
XP025636833, ISSN: 0041-624X, [retrieved on
19720901], DOI: 10.1016/0041-624X(72)90297-1**

EP 4 179 308 B1

- TOMÁS MANZANEQUE ET AL: "Method to Determine the Closed-Loop Precision of Resonant Sensors from Open-Loop Measurements", ARXIV.ORG, CORNELL UNIVERSITY LIBRARY, 201 OLIN LIBRARY CORNELL UNIVERSITY ITHACA, NY 14853, 3 July 2020 (2020-07-03), XP081733824
- BART LIPKENS ET AL: "The Effect of Frequency Sweeping and Fluid Flow on Particle Trajectories in Ultrasonic Standing Waves", IEEE SENSORS JOURNAL, IEEE, USA, vol. 8, no. 6, 1 June 2008 (2008-06-01), pages 667 - 677, XP011215548, ISSN: 1530-437X
- STEFAN LAKÄMPER ET AL: "Direct 2D measurement of time-averaged forces and pressure amplitudes in acoustophoretic devices using optical trapping", LAB ON A CHIP, vol. 15, no. 1, 5 November 2014 (2014-11-05), UK, pages 290 - 300, XP055292752, ISSN: 1473-0197, DOI: 10.1039/C4LC01144A

**Description**

Methods and systems for manipulating a particle

TECHNICAL FIELD

The present disclosure relates to a method for manipulating a particle, in particular for studying small particles and/or biological cellular bodies.

BACKGROUND

Microscopic study and/or manipulation of small particles is an active field of research, in particular in case the small particles are biological specimens such as cells, organelles, few-cell bodies and the like. For biological specimens, biological processes are researched. Biological cells have an outer membrane. This membrane is the interface between the cell and its environment. The membrane therefore builds the platform for a variety of processes that involve membrane embedded biomolecules making physical contact with binding partners in the extracellular space.
Therefore, a number of techniques have been developed for studying cellular and subcellular processes by interaction with the cellular membrane, and techniques have been devised to quantify the components of the cell surface to obtain information on the specific cell type (for example to determine the type of breast cancer).
A particularly suitable technique for manipulating and/or studying small particles and in particular cellular bodies is employing of acoustic forces. It is noted that the use of acoustic forces to manipulate micron-sized particles and cells is known in general. E.g. WO 2014/200341 provides an example of an acoustic wave system for use in studying biomolecules attached to microbeads; WO 2018/083193 discloses a method, system and sample holder for manipulating and/or investigating cellular bodies; and WO 2019/212349 discloses a method for probing mechanical properties of cellular bodies. Further, G. Thalhammer et al. "Acoustic force mapping in a hybrid acoustic optical micromanipulation device supporting high resolution optical imaging", Lab Chip 16:1523 (2016) is noted, and a summary of current research in acoustofluidics can be found in V. Marx, "Biophysics: using sound to move cells", Nature Methods, 12(1):41 (2015). Reviews are also presented in H. Mulvana et al., "Ultrasound assisted particle and cell manipulation on-chip", Adv. Drug Del. Rev. 65(11-12):1600 (2013); and M. Evander and J. Nilsson. "Acoustofluidics 20: Applications in acoustic trapping", Lab on a Chip, 12:4667 (2012).
However, there is an ongoing desire for further increases in aspects such as sample versatility, signal-to-noise ratio, sample size, detection speed, magnitude of applied force, and in particular reliability and/or reproducibility of tests and test results.

SUMMARY

In view of the above, the invention is defined by a method according to claim 1.
A method is provided which comprises the steps of

providing a sample holder comprising a holding space for holding a sample comprising a particle in a fluid medium;
providing a driving signal, having a signal frequency, a signal amplitude and a signal power, to the sample holder generating an acoustic wave in the sample holder for applying an acoustic force to the particle, the wave having a frequency; and
determining an acoustic resonance frequency of the sample holder.

The method further comprises the steps of:

determining a quality factor for the sample holder with respect to the resonance frequency;
and based on the quality factor at least one of:

determining suitability of the sample holder for further use,
determining an acoustic force in at least part of the sample holder, and
controlling at least one of the signal frequency, a signal amplitude, a signal power, a sample composition of the sample in the holding space and a temperature of at least part of the sample and/or the sample holder.

The sample holder may comprise an oscillator, which may comprise a transducer for converting an electrical driving signal such as an oscillating voltage, into an acoustic signal in the sample holder providing the acoustic wave.
The acoustic wave may be an ultrasonic acoustic wave, e.g. having a frequency in a range of 1-30 MHz, preferably in a range 5-20 MHz.

The method may comprise providing a driving signal with a single frequency or with a (periodic or aperiodic) modulated frequency such as one or more of a sum of plural frequencies, a frequency sweep and a chirp. Also, in some cases driving signals of different waveforms may be applied and/or combined with other waveforms (sinusoidal, triangular, saw tooth, etc.).

For acoustic particle manipulation, standing acoustic waves may be used and one or more resonance frequencies for effective generation thereof may be determined in various ways. Calculated resonance frequencies tend not to be sufficiently accurate in practice. Practical determination of a resonance frequency may comprise performing a frequency sweep over a range of frequencies comprising at least one resonance frequency and detecting the at least one resonance frequency. System behaviour may then be further studied employing frequencies in a comparably narrow frequency range about the resonance frequency.

The resonance quality factor, also referred to as quality number or Q-factor, provides an indication of system- and frequency characteristics and an indication of efficiency of exciting the acoustic wave at and/or near the resonance frequency and/or using such acoustic wave. Therewith, the Q-factor provides additional information about behaviour of the system and efficiency of manipulating a portion of a sample in the sample holder.

A resonance frequency is in principle a system parameter, in particular a characteristic of the oscillator, the sample holder and the sample medium and the mechanical properties of these components. However, resonance conditions and therewith resonance frequencies tend, in practice, to differ between individual sample holders, due to manufacturing variations, and not to be constant but to depend on several circumstances, in particular manufacturing and/or age of the sample holder and/or circumstances such as sample fluid composition including presence of occasional gas bubbles, sample holder temperature, density of suspended particles / cellular bodies, etc., all or some of which may vary.

Moreover, it has been found that not only the resonance frequency itself is subject to variation but that also one or more frequency properties around the resonance frequency, e.g. width and/or any asymmetry of the resonance peak, tend to vary, and that as a result, determination of any effect of the acoustic wave (and -force) on (at least part of) a sample in the sample holder may, in fact, not be known and/or maintained as accurately as originally considered or desired. Thus, it has now been found that the Q-factor varies, that this may be detected, quantified and taken into account in determination of the acoustic force, and that the Q-factor is a predictor for the quality of the sample holder for generation of an acoustic wave at or near an expected and/or determined resonance frequency. E.g. a relatively low Q-factor may indicate a low coupling of an applied driving signal to a desired acoustic mode of the sample holder and/or may indicate a defect in the sample holder. It may also indicate poor experimental conditions such as a wrong temperature, wrong sample medium, presence of a gas bubble, etc.

Thus, by determining the Q-factor and basing determination of an acoustic force and/or controlling of manipulation parameters on the basis of the Q-factor, the present method provides an increased accuracy for determination and/or application of the acoustic force. The improved accuracy holds for one or more of determining and/or scaling an applied force on a particle, and therewith facilitating evaluation of any effect of the force on the particle, for predicting a force to be applied to the particle and/or for determining if the quality of a sample holder is (still) good enough for use in an experiment.

Moreover, the method enables determination of suitability of the sample holder for further use in one or more of experiments, studies, assays, etc. Also, potential aging effects of the sample holder and/or at least part of a sample contained therein may be assessed. E.g. the sample holder may be selected or rejected for further use if the quality factor is insufficient or different from the quality factors and/or (average) acoustic forces determined for a plurality of sample holders by a predetermined amount, and/or if the quality factor exhibits a particular variation over time and/or a particular dependency on experiment parameters like temperature and/or sample properties. Further, determination of the quality factor and an acoustic force of the sample holder facilitates comparison of these properties to statistical reference values determined for a plurality of sample holders such as a correlation relation.

The method may comprise the further steps of:

> selecting at least one property of the sample holder selected from a group consisting of a voltage drop an impedance, an admittance, a susceptance, a conductance and a signal phase shift;
> determining a value of the selected property at a plurality of signal frequencies in a signal frequency range; and
> determining the resonance frequency and/or the quality factor on the basis of the selected property.

The impedance, admittance, susceptance, conductance and signal phase shift may be determined as one or more electrical properties of the sample holder and/or may include in the determination at least part of an oscillator, e.g. a transducer, for providing the periodic driving signal, which oscillator may be comprised in the sample holder. This facilitates detection and/or processing the respective selected property.

Determining a value of the selected property at a plurality of signal frequencies in a signal frequency range can be done by sweeping the frequency applied to the transducer in time while measuring the selected property and/or, for example, by applying a short burst containing a plurality of desired spectral frequencies simultaneously and measuring a response function of the sample holder. E.g. one may determine the impulse response of the sample holder after excitation with a suitably selected driving pulse.

In an aspect, preferably in combination with one or more other aspects disclosed herein, a method is provided comprising the steps of

providing a sample holder comprising a holding space for holding a sample comprising a particle in a fluid medium; providing a driving signal, having a signal frequency, a signal amplitude and a signal power, to the sample holder generating an acoustic wave in the sample holder for applying an acoustic force to the particle, the wave having a frequency; and

determining an acoustic resonance frequency of the sample holder, wherein the method further comprises the steps of determining a frequency difference between the signal frequency and the resonance frequency and providing a feedback signal for adjusting the signal frequency in dependence of the frequency difference.

These method steps may be repeated one or more times wherein the resonance frequency may be determined anew one or more times. Thus, any changes may be detected.

Such method may suitably comprise the further step of adjusting the signal frequency on the basis of the feedback signal. Thus, the signal frequency may be maintained at or near the resonance frequency, and in case of repetition also when the resonance frequency varies.

The determination of the frequency difference and the determination of the resonance frequency may be based on the selected property as indicated above; preferably then both are determined on the same selected property.

In particular, such method may comprise superposing a modulation frequency on the signal frequency thus providing a modulated signal frequency, wherein the step of determining a frequency difference between the signal frequency and the resonance frequency comprises determining the frequency difference with respect to the modulated signal frequency and the resonance frequency, and wherein the method further comprises adjusting the signal frequency and/or the modulation frequency in dependence of the frequency difference and/or adjusting the signal frequency and/or the modulation frequency on the basis of the feedback signal, where applicable.

Thus, active locking of the signal frequency may be provided. Such locking facilitates a periodic redetermination of the signal frequency with respect to the resonance frequency and/ or the other way around thus facilitating reestablishment of the resonance frequency and/or the Q-factor and according adaptation of the signal frequency. Hence, reliability of the method and any measurement results obtained with it may be increased.

The modulation frequency may be any periodic modulation, in particular a sinusoidal, triangular or a saw-tooth modulation pattern.

Adjusting the modulation frequency in dependence of the frequency difference and/or the feedback signal may allow adaptation of the modulated signal frequency to a change in position and/or other characteristics of the resonance peak, such as frequency width and/or asymmetry.

In any embodiment discussed herein, the signal amplitude and/or signal power may be determined and based on at least one of the resonance frequency, the quality factor and the feedback signal, where applicable, the signal amplitude and/or signal power may be controlled.

A locked resonance frequency as described above may improve stability of one or more operating parameters, e.g. like a position of an acoustic standing wave node and/or an acoustic force field gradient in the sample holder. Moreover, maintaining a driving frequency at or near the resonance frequency may reduce or prevent power losses into the system which may cause and/or increase heating of at least part of the sample. Since a temperature change tends to result in a change of resonance conditions, in particular the latter effect may otherwise provide a self-increasing effect and may even risk causing a runaway process wherein the system is forced away from resonance increasingly strongly.

A Q-factor may be determined in dependency of one or more system variables like a sample fluid, a temperature of at least part of a sample holder, a driver signal characteristic such as a driver signal amplitude, noise, time etc. Conversely, determining and/or monitoring a Q-factor may serve for monitoring and/or control of one or more system variables. E.g., the method may comprise determining a difference between a determined Q-factor and a predetermined Q-factor, and providing an associated signal. The signal may serve for warning an operator, and/or as a feedback signal for adjusting one or more system variables and/or process variables e.g. variables associated with the sample holder, with a sample in the sample holder and/or any one or more of experiments, studies, assays, etc. performed with the sample and/or sample holder. The Q-factor and/or a variation of the Q-factor as a function of one or more of the system variables and/or process variables may serve for determining and/or quantifying sample holder quality for enabling and/or providing reliable results in experiments performed with the sample holder.

Also or alternatively, the method may comprise determining a difference between a determined Q-factor and a desired Q-factor and providing a feedback signal for adjusting at least one system parameter such as the driving signal which may comprise a driving signal frequency and/or a driving signal amplitude, and/or a temperature in at least a part of the sample holder, and a sample parameter such as sample composition and/or sample flow, in dependence of the difference. Thus, the Q-factor may be locked and/or a system behaviour may be determined and/or be tracked, and/or a lock of the driving signal may be characterised and/or be improved, and/or a sample behaviour may be characterised and/or be improved.

Also or alternatively, the method may comprise determining an effect of the acoustic force in at least part of the sample holder and determining the acoustic force in the part and/or of a scaling on the basis of the determined Q-factor.

An aspect, which may comprise any other method embodiment disclosed herein, comprises the steps of:

> providing a sample holder comprising a holding space for holding a particle in a fluid medium;
> providing a repeating, possibly periodic, driving signal, having a signal frequency, a signal amplitude and a signal power, to the sample holder generating an acoustic wave in the sample holder for applying an acoustic force to the particle in a first direction, the wave having a frequency;
> wherein the method further comprises, for at least one frequency, determining an acoustic force in each of plural positions in the holding space distributed in at least one or two directions perpendicular to the first direction.

It has been found that the acoustic force may not be constant throughout the sample holder but that for one acoustic resonance and/or driving signal, significant local force variations may arise. By determining an acoustic force in plural positions in the holding space distributed in two directions perpendicular to the first direction a spatial force distribution, or a force map, may be determined. Here, such force map may be measured and/or calculated from measurement data, and/or a known force map may be used to quantify and/or correct measurement data. Thus, the present method provides an increased accuracy for determination and/or application of the (actual) acoustic force on a particle in the sample holder. Note that the spatial force distribution may assist determining force gradients. Local force variations may be detectable in one, two and/or three spatial dimensions.

It has been found that relative differences in local forces tend to be sample holder specific and to be relatively constant over time for a given sample holder, the force being primarily dependent on properties of the acoustic wave in the sample holder such as the frequency and amplitude; see also elsewhere herein.

For that reason it is preferred that, in any aspect and/or embodiment disclosed herein, the respective method comprises storing in a memory at least one of

> frequency data representing resonance frequency information of the sample holder,
> quality-factor data representing quality-factor information of the sample holder, and
> force data representing at least one of:
>
>> the acoustic force in plural positions in the sample holder, in particular in the holding space, and
>> the spatial force distribution of at least part of the sample holder, in particular the holding space.

In particular the memory may be comprised in a machine readable medium. Also or alternatively, the method may comprise providing the sample holder with the memory and/or with an identifier for accessing and/or retrieving from the memory the stored frequency data and/or the stored quality-factor data and/or the stored force data, where applicable.

This facilitates characterisation of at least part of the sample holder and possibly scaling and/or normalising of measurement results from different positions in the sample holder.

The memory may be kept remote from the sample holder, possibly on a computer server and/or as part of an internet cloud memory. Storing the force data of a sample holder on a machine readable medium may facilitate automation of analysis and/or use of the force data. The medium and/or the identifier may comprise any suitable machine readable reference and/or indicia, e.g. in the form of a visual and/or electromagnetic readable code like an alphanumeric code, a bar-code, a QR-code and/or an RF-ID code.

Also or alternatively, data representing resonance frequency information and/or Q-factor data may be stored. For example, previously stored frequency data and/or Q-factor data may be compared to currently measured frequency data and/or Q-factor data to assess if the previously stored force maps (e.g. lateral force distribution data) are still valid. It can be assumed that a significant change in resonance frequency and/or Q-factor will be indicative for a change in the force map.

Any method discussed herein may comprise determining an acoustic force in plural positions in the holding space in parallel. In particular, such determination may comprise the steps of:

> providing the sample holder with a sample comprising a plurality of particles in a fluid medium;
> providing the driving signal to the sample holder generating an acoustic wave in the sample holder and applying an acoustic force to the plurality of particles;
> monitoring spatiotemporal behaviour of the particles with respect to at least part of the sample holder; and
> determining an acoustic force for each particle on the basis of at least part of the monitored spatiotemporal behaviour of the respective particle.

By determining an acoustic force in plural positions in the holding space in parallel, determination may be accelerated compared to sequential determination, facilitating repetitive determination and/or checking, possibly with respect to modification of one or more variables, and (effects of) possible unwanted and/or adverse temporal fluctuations may be reduced. Thus, accuracy and reliability may be improved. Such determined acoustic forces, both in sequential and parallel cases, may be used to predict and/or scale local forces acting on one or more particles of a sample subject to acoustic forces at the respective position(s).

One or more methods discussed herein may allow providing a probing particle independent map that can be used to predict forces acting on any sample particle.

In any method embodiment discussed herein, the determination of an acoustic force on a particle may comprise one or more optical methods, e.g. using an imaging microscope and capturing images such as video images wherein the spatiotemporal behaviour may be determined by analysing the captured video images.

The driving signal may be provided to generate a time-varying, e.g. pulsed acoustic force, and spatiotemporal behaviour of the particles may then be monitored with respect to at least one acoustic force variation e.g. at least one acoustic force pulse.

By applying e.g. a pulsed force, a temporal force variation may be determined. In particular, an effect of the acoustic force may be determined as a modification of other circumstances, in particular, preferably otherwise constant and substantially unchanging circumstances. E.g., displacement properties of the particles through the sample fluid may be determined on the basis of the Navier-Stokes equations for the specific particle shape and size, which for generally spherical particles may be simplified to the Stokes drag, and relative to a situation wherein the particles may be at rest, preferably at rest on a surface in and/or defining part of the holding space. Thus, a force profile on a particle of an acoustic wave in the sample holder with respect to a reference may be determined, in particular with respect to a surface from which the particle is urged away by the wave. In such case, forces acting at or close to the surface may in particular be determined.

Use of the Stokes drag force on a particle subject to an acoustic force has been explained in some detail in D. Kamsma "Acoustic Force Spectroscopy (AFS) - From single molecules to single cells", PhD-thesis Vrije Universiteit Amsterdam, ISBN: 978-94-028-1009-7. In order to achieve particularly accurate results the medium temperature may also be taken into account for such drag calculations since the viscosity of the medium is typically strongly temperature dependent.

As has been explained above, spatial resolution allows determining local variations of forces. In some cases, e.g. given enough measurement locations (e.g. enough spatial sampling) a spatial map may be interpolated based on plural local measurements. I.e. such map may be used to predict a force on a particle even if at a specific location of the particle no measurement has been previously performed. Such interpolation may be based on any suitable interpolation function and/or may be or comprise for example a least squares or maximum likelihood fit to any arbitrary function that represents a typical local force variation.

A force determined for one particle or one number of particles may be used for determining a force for another particle, in particular another particle provided at another time at the same location in the sample holder as the first particle. This may in particular apply if the properties of one or more (first) particles are known and differ from properties of one or more of the other (second) particles. This can be done, for example, by calculating the local (one-, two- or three dimensional) acoustic pressure gradient and/or acoustic energy density based upon the measured force on the one particle or one number of particles. Conversion from force measurement to acoustic energy density and back can for example be done using the following equation taken from Bruus, H. (2012) 'Acoustofluidics 7: The acoustic radiation force on small particles', Lab on a Chip, The Royal Society of Chemistry, pp. 1014-1021. doi: 10.1039/c2lc21068a:

$$F_z^{rad} = -\partial_z U^{rad} = 4\pi\Phi(\kappa, \rho)ka^3 E_{ac}\sin(2kz)$$

here $F_z^{rad}$ is the acoustic radiation force, $\boldsymbol{U^{rad}}$ is the acoustic radiation force potential, $\Phi$ is the acoustic contrast factor, $\kappa$ is the compressibility ratio, $\rho$ is the density ratio, k is the wavenumber, a is the particle radius, $\boldsymbol{E_{ac}}$ is the acoustic energy density, and z is the distance from the wall.

An average over the determined forces of at least some particles in at least part of the sample holder may be determined. The thus determined average force may be used as a parameter for determining quality of a sample holder and/or may be used to scale one or more properties, e.g. amplitude and/or frequency of the driving signal in order to account for differences between sample holders e.g. to ensure that similar, well determined, forces are applied to different sample holders.

By measuring force maps for multiple sample holders and establishing a correlation with the Q-Factor, quality control of sample holders during the production process may be enabled, based on the Q-factor alone. This avoids measurements of the full force map of sample holders that are considered outside of desired specifications. Also or alternatively, changes in Q-factor over time may be detected that could signal or do signal a change in efficiency and/or force map accuracy.

Any method discussed herein may comprise the further steps of providing the sample holder with a plurality of particles in a fluid medium, and determining a size of at least some of the particles.

The method may further comprise one or more of:

- the plurality of particles having a size distribution with a mean size and a standard deviation of less than 10% of the mean size, preferably less than 5% of the mean size, more preferably less than 3%, e.g. less than 1% of the mean size;
- the particles being spherical having a mean diametrical size in a range of 5-25 micrometer, preferably in range of 8-15 micrometer, more preferably in range of 10-12 micrometer;
- the particles having a density distribution with a mean density and a standard deviation of less than 10% of the mean density, preferably less than 5% of the mean density, more preferably less than 3%, e.g. less than 1% of the mean density; and
- the particles having an average density differing from an average density of the sample fluid in the holding space by 2-10 %, more preferably in a range 3-7%.

Since acoustic forces on a particle in a fluid depend on the size, density and compressibility (acoustic contrast factor) of the particle relative to the fluid, the more uniform the particles are, the better (local) variations in acoustic energy density itself translate into detectable effects rather than variations in the particles which could otherwise lead to noticeably different behaviour for identical acoustic energy densities. The presented values for size and density have shown to be readily detectable using optical techniques and to enable reliable detection of forces and force differences. Alternatively, the individual particle sizes could be measured optically and corrected for in the analysis.

In particular, accuracy of determination of an acoustic force in the holding space, in particular based on the Navier Stokes equations and/or other equations relating to acoustic radiation force on small particles, may depend on determination of one or more properties of the particle like size and/or density, in particular with respect to the sample fluid. The better such properties are known in absolute and/or relative values, the more accurate (local) acoustic forces may be determined. This may apply both to detection of forces and/or to control of applied forces. E.g. size determination may be done in situ, e.g. via microscopic methods, and/or by controlling sizes and/or size distribution of particles before introducing the particles into the sample holder.

E.g. particles in a watery sample fluid may have an average density of about 1 $g/cm^3$, e.g. they may have an average density larger than 1 $g/cm^3$, preferably in a range 1,02-1,10 $g/cm^3$, more preferably in a range 1,03-1,07 $g/cm^3$.

The sample holder may comprise a wall surface portion in the holding space and the method may comprise determining an adhesion force of the particle to the wall surface portion.

Thus, one or more of the particles may be identified and/or separated based on their adhesion force to the wall surface. The wall surface may be a functionalised wall surface as discussed elsewhere herein.

Also or alternatively, accounting and/or correcting for local force variations may improve determination and/or correction of an adhesion force of a particle to a wall surface portion, and/or it may improve application of a desired force to detach particles from selected wall surface portions selectively. Also or alternatively, knowledge of a well-defined adhesion force may allow (improvements in) quantifying an applied acoustic force at or near the surface. One example is the accurate measurement of the intercellular binding strength of immune cells (e.g. T-Cells, CAR-T cells, NK cells, CAR-NK cells, etc.) to their target cells (e.g. tumor cells, virus infected cells, etc.).

Any method discussed herein may further comprise, for at least one frequency,

applying the acoustic force in a first direction and determining an acoustic force in each of plural positions in the holding space distributed in at least one or two directions perpendicular to the first direction;
determining for at least part of the sample holder at least one of

- an average force of the determined acoustic forces associated with that part of the sample holder,
- a standard deviation of the determined acoustic forces associated with that part of the sample holder,
- a difference between a determined acoustic force and the average force; and
- a correlation value relating the average force to the quality factor; and

determining based on at least one of the average force, the difference, the standard deviation and the correlation value, where applicable, suitability of the sample holder for use in a method for manipulating a particle, in particular for further and/or repeated use of the sample holder in any method discussed herein.

An average force over the determined forces of at least some particles in at least part of the sample holder may be determined. With respect to that average force, (local) differences may be determined of the determined forces of at least some particles in at least part of the sample holder, in particular a standard distribution of the differences may be determined.

The differences with respect to the average force may indicate position-sensitivity and/or homogeneity of the sample holder and, respectively, for any study and/or measurement performed with the sample holder.

The average force may be equated to an efficiency value of the sample holder. An average force may, for instance, be determined for predetermined portions of the sample holder, e.g. a predetermined portion of a detection volume of a detector such as a field of view of a microscope. Such average force, which may be suitably referred to as a local average force may be likewise equated to a local efficiency value.

A sample holder suitability for a particular use (e.g. experiment, measurement, detection, ...) may be related to the efficiency and may also be related to other parameters like homogeneity of the forces and/or be determined in terms of one or more of maximum forces, Root-Mean-Square value, or any other selection of and/or operation on one or more properties in the measured raw data.

Differences between local average forces with respect to the (overall) average force may indicate position-sensitivity and/or homogeneity of the sample holder and, respectively, for any study and/or measurement performed with the sample holder.

Thus, variations of local averages may also be used.

Also or alternatively, determination of plural acoustic forces facilitates use of other statistical analysis tools like determination of standard deviations and/or correlations.

Moreover, it has been found that a relationship between the efficiency and the Q-factor of a sample holder is a very effective and reliable measure for determining reliability and predictability of acoustic force generation and therewith of accuracy for determination and/or application of the acoustic force. Thus, such relationship is effective in determining suitability of the sample holder for further use and therewith for quality control of the method and devices used therein.

It has been found during tests over multiple sample holders that a generally linear relationship may be found between the Q-factor and a peak efficiency value which corresponds to the highest efficiency value determined in the sample holder. A suitable relationship, e.g. for the aforementioned quality control, is a statistical R-square ($R^2$) fit to of the Q-factor and the peak efficiency with respect to the linear relationship.

Hence, any method described herein may be performed on a plurality of sample holders, including for each sample holder of the plurality of sample holders at least the steps of

determining a quality factor for the respective sample holder with respect to the resonance frequency, and determining at least one of an acoustic force, an average acoustic force in at least part of the respective sample holder, and an efficiency value.

In addition a correlation relation may be determined between the thus determined quality factors and the at least one of the acoustic forces, the average acoustic forces and the efficiency values.

Some of the sample holders may be of different types, e.g. differing with respect to one or more of size and/or shape of at least part of the holding space and/or of a sample fluid conduit, construction materials, size and/or shape of an oscillator for generating the acoustic signal (e.g. a piezo element and/or transducer), stages of manufacturing and/or use preparation, etc. etc. In such cases correlation relations may suitably be determined per type.

Then also a further sample holder may be provided and any method discussed herein me be performed using the further sample holder comprising determining a quality factor for the further sample holder with respect to its resonance frequency, and preferably determining at least one of an acoustic force, an average acoustic force in at least part of the further sample holder and an efficiency value; and additionally determining suitability of the further sample holder for further use based on a relationship between the correlation relation and the thus of the further sample holder determined quality factor and, where applicable, the at least one of the acoustic force, the average acoustic force and the efficiency value.

In some cases, a comparison between the correlation relation and the quality factor of the further sample holder may already indicate suitability or not for further use of the sample holder. Assessing also an (average) acoustic force may facilitate more detailed and/or more accurate determination. Note that further use may comprise further manufacturing and/or preparation steps of the sample holder. An early indication of a possible defective sample holder may therefore save manufacturing costs.

Using any one of the methods described herein, a sample holder may be characterised and be used for studying other particles, which may also be referred to as "second particles" or "sample particles", wherein one or more relevant properties for determining actual acoustic forces at or on the other particle are used.

Thus, with a sample holder which has been used as the sample holder in any method described herein a method may be performed further comprising providing a second particle in a sample fluid in the holding space of the sample holder, possibly a second sample,

providing a second driving signal, having a second signal frequency, a second signal amplitude and a second signal power, to the signal holder generating a second acoustic wave in the sample holder for applying a second acoustic force to the particle, the second wave having a second frequency;

determining an acoustic force on the second particle on the basis of at least one of

the quality factor of the sample holder,

and, in case an acoustic force in each of plural positions in the holding space distributed in at least one or two directions perpendicular to the first direction has been determined, the acoustic force in a position in the holding space at or near, preferably closest to, a position of the second particle, and/or a spatial force distribution of at least part of the sample holder,

and, when applicable, the correlation relation as referred to elsewhere herein.

The first and second particles may be the same particles and/or one or more of the first and second signal frequency, first and second signal amplitude, first and second signal power and first and second acoustic wave, respectively, may be the same. In particular, the method comprises (manipulation of) plural second particles and the second particles may be biological cellular particles and/or particles interacting with and or being attached to biological cellular particles.

The sample holder may comprise a functionalised surface.

The method may comprise providing the acoustic wave such that the acoustic force on the particle(s) is relatively high at or near a surface which may be part of the sample holder in the holding space and/or which may define at least part of the holding space.

Also, herein a system is provided. The system comprises a sample holder comprising a holding space, wherein the sample holder has been used for a method according to any one of the preceding claims and wherein the system comprises a memory comprising at least one of frequency data representing resonance frequency information of the sample holder,

quality-factor data representing quality-factor information of the sample holder, and
force data representing at least one of

the acoustic force in plural positions in the sample holder, in particular in the holding space, and
the spatial force distribution of at least part of the sample holder, in particular the holding space.

At least part of the memory may be comprised in a machine readable medium. The sample holder may be provided with at least part of the memory and/or with an identifier for accessing and/or retrieving stored force data from the memory. At least part of the memory may be located elsewhere, possibly on a remote server and/or on a cloud server. The memory may comprise a database.

BRIEF DESCRIPTION OF THE DRAWINGS

The above-described aspects will hereafter be more explained with further details and benefits with reference to the drawings showing a number of embodiments by way of example.

**Fig. 1** shows a schematic drawing of an embodiment of a manipulation system in accordance with the present concepts;

**Fig. 2** shows a cross section of a sample holder;

**Fig. 2A** shows a detail of the sample holder of **Fig. 2** as indicated with "IIA";

**Fig. 3** shows a simplified schematic circuit of an electrical setup of an embodiment of a manipulation system in accordance with the present concepts;

**Fig. 3A** shows a complex phase diagram of the system of **Fig. 3;**

**Fig. 4** shows simulated data of, from top to bottom admittance, conductance and susceptance versus frequency, and a resonance peak having Full Width at Half Maximum value FWHM;

**Figs. 5-6** show exemplary measurements of the data indicated in **Fig. 4;**

**Fig. 7** shows exemplary measurements of conductance of a sample holder versus signal frequency for various temperatures;

**Fig. 8** shows exemplary measurements of efficiency, resonance frequency and quality factor of a sample holder versus temperature;

**Figs. 9A and 9B** show a temperature dependency of the resonance frequency $f_0$ and the quality factor $Q$, respectively for a sample holder as a function of temperature at two different days a week apart

**Fig. 10** shows exemplary measurements of the effective force on a particle in the sample holder versus applied signal power;

Figs. 11A-11C indicate active signal frequency locking, wherein Fig. 11A shows measured conductance data as a function of frequency; Fig. 11B indicates modulated driving signal frequency and Fig. 11C indicates adjustment of a driving signal power;

Fig. 12 shows the results of a repetition of an experiment of Fig. 10, but now using active signal frequency locking in accordance with Figs. 11A-11C;

Figs. 13A-13C indicate a method of determining an acoustic force;

Fig. 14 shows part of a force map of a sample holder and a method step of determining same;

Fig. 15 and Table 1 indicate (determination of) a relation between peak efficiency of sample holders versus quality number for several sample holders;

Fig. 16 shows a flow diagram of a process for chip fabrication, selection and use in accordance with the present concepts.

DETAILED DESCRIPTION OF EMBODIMENTS

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified. Further, elements that are at least substantially identical or that perform an at least substantially identical function are denoted by the same numeral, where helpful individualised with alphabetic suffixes.

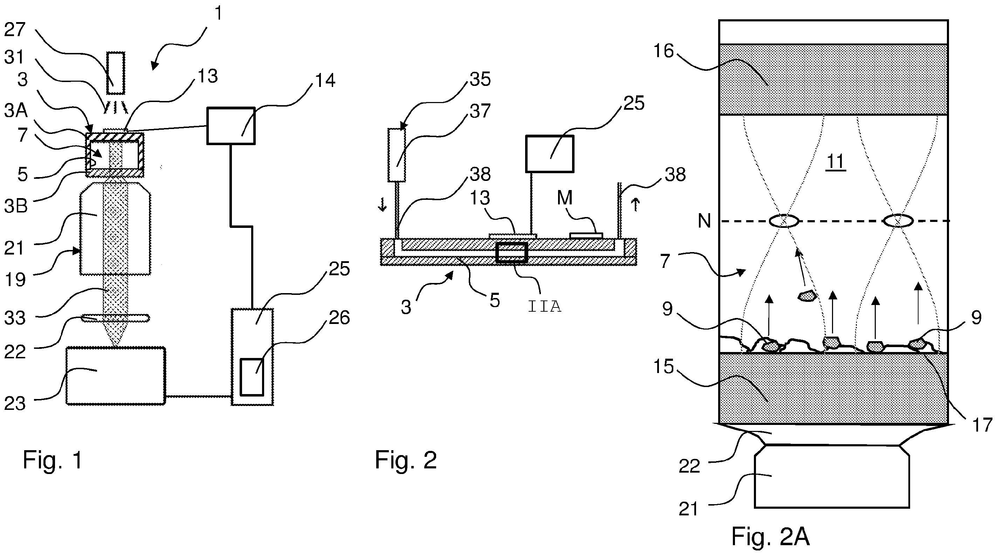

Fig. 1 is a schematic drawing of an embodiment of a manipulation system 1 in accordance with the present concepts, Fig. 2 is a cross section of a sample holder and Fig. 2A is a detail of the sample holder of Fig. 2 as indicated with "IIA".

The system 1 comprises a sample holder 3 comprising a holding space 5 for holding a sample 7 comprising one or more biological cellular bodies 9 in a fluid medium 11 as exemplary particles of interest. It is noted that also, or alternatively, other types of particles like microspheres could be used, possibly attached to biological cellular bodies 9. The fluid preferably is a liquid or a gel. The system 1 further comprises an acoustic wave generator 13, e.g. a piezo element, connected with the sample holder 3 to generate an acoustic wave in the holding space 5 exerting a force on the sample 7 and cellular bodies 9 in the sample 7. The acoustic wave generator 13 is connected with an optional controller 14 and power supply, here being integrated.

The sample holder 3 comprises a wall 15 providing the holding space 5 with a functionalised wall surface portion 17 to be contacted, in use, by part of the sample 7. A further wall, e.g. opposite wall 16, may also or alternatively be provided with a (further) functionalised wall surface portion.

The shown manipulation system 1 comprises a microscope 19 with an objective 21 and a camera 23 connected with a computer 25 comprising a controller and a memory 26. The computer 25 may also be programmed for tracking one or more of the cellular bodies based on signals from the camera 23 and/or for performing microscopy calculations and/or for performing analysis associated with (superresolution) microscopy and/or video tracking, which may be sub-pixel video tracking. The computer or another controller (not shown) may be connected with other parts of the system 1 (not shown) for controlling at least part of the microscope 19 and/or another detector (not shown). In particular, the computer 25 may be connected with one or more other parts of the system such as the acoustic wave generator 13, the power supply thereof, the controller 14 thereof (both as shown in Fig. 1), the light source, a temperature control, sample fluid flow control, etc. (none shown).

The system further comprises a light source 27. The light source 27 may illuminate the sample 7 using any suitable optics (not shown) to provide a desired illumination intensity and intensity pattern, e.g. plane wave illumination, Köhler illumination, etc., known per se. Here, in the system light 31 emitted from the light source 27 is directed through the acoustic wave generator 13 to (the sample 7 in) the sample holder 3 and sample light 33 from the sample 7 is transmitted through the objective 21 and through an optional tube lens 22 and/or further optics (not shown) to the camera 23. The objective 21 and the camera 23 may be integrated. In an embodiment, two or more optical detection tools, e.g. with different magnifications and/or components related to spectral and/or polarization properties, may be used simultaneously for detection of sample light 33, e.g. using a filter and/or a beam splitter.

In another embodiment, not shown but discussed in detail in WO 2014/200341, the system comprises a partially reflective reflector and light emitted from the light source is directed via the reflector through the objective and through the sample, and light from the sample is reflected back into the objective, passing through the partially reflective reflector and directed into a camera via optional intervening optics. Further embodiments may be apparent to the reader.

The sample light 33 may comprise light 31 affected by the sample (e.g. scattered and/or absorbed) and/or light emitted by one or more portions of the sample 7 itself e.g. by chromophores and/or fluorophores attached to the cellular bodies 9.

Some optical elements in the system 1 may be at least one of partly reflective, dichroic (having a wavelength specific reflectivity, e.g. having a high reflectivity for one wavelength and high transmissivity for another wavelength), polarisation selective and otherwise suitable for the shown setup. Further optical elements e.g. lenses, prisms, polarizers, diaphragms, reflectors etc. may be provided, e.g. to configure the system 1 for specific types of microscopy.

The sample holder 3 may be formed by a single piece of material with a channel inside, e.g. glass, injection moulded polymer, etc. (not shown) or by fixing different layers of suitable materials together more or less permanently, e.g. by welding, glass bond, gluing, taping, clamping, etc., such that a holding space 5 is formed in which the fluid sample 7 is contained, at least during the duration of an experiment. As shown in Figs. 1 and 2, the sample holder 3 may comprise a part 3A that has a recess being, at least locally, U-shaped in cross section and a cover part 3B to cover and close (the recess in) the U-shaped part providing an enclosed holding space 5 in cross section. A monolithic sample holder, at least at the location of the acoustic wave generator 13, may be preferred over an assembled sample holder for improving acoustic coupling, reducing losses and/or preventing local variations.

As shown in **Fig. 2,** the sample holder 3 is connected to an optional fluid flow system 35 for introducing fluid into the holding space 5 of the sample holder 3 and/or removing fluid from the holding space 5, e.g. for flowing fluid through the holding space (see arrows in Fig. 2). The fluid flow system 35 may comprise a manipulation and/or control system, possibly associated with the computer 25. The fluid flow system 35 may comprise one or more of reservoirs 37, pumps, valves, and conduits 38 for introducing and/or removing one or more fluids, sequentially and/or simultaneously. The sample holder 3 and the fluid flow system 35 may comprise connectors, which may be arranged on any suitable location on the sample holder 3, for coupling/decoupling without damaging at least one of the parts 3, 35, and preferable for repeated coupling/decoupling such that one or both parts 3, 35 may be reusable thereafter. Further, an optional machine-readable mark M or other identifier is attached to the sample holder 3, possibly comprising a memory.

**Fig. 2A** is a schematic of a number of cellular bodies 9 in the sample holder 3 of **Fig. 2.** Part of the wall 15 of the sample holder 3 is optionally provided with a functionalised wall portion 17, e.g. an area of the wall being covered with biological cells of a different type to which the cellular bodies of interest 9 may adhere. Also shown is part of the microscope lens 21 and an optional immersion fluid layer 22 for improving image quality.

On providing a periodic driving signal to the acoustic wave generator 13 a standing wave is generated in the sample holder 3. The signal may be selected, as indicated, such that an antinode of the wave is generated at or close to the wall surface (of the sample holder 3 e.g. surface portion 17) and a node N of the wave W away from the surface 17, generating a local maximum force F on the bodies 9 at or near the surface towards the node. Thus, application of the signal may serve to probe adhesion of the bodies 9 to the surface and/or any functionalised layer on it in dependence of the force.

In an example an optimal force generation for particular studies may be achieved by selecting acoustic cavity parameters and the frequency/wavelength of the acoustic wave in order to create a maximum pressure gradient at the functionalised wall surface, e.g. by ensuring that the distance from the wall surface to the acoustic node is approximately ¼ wavelength.

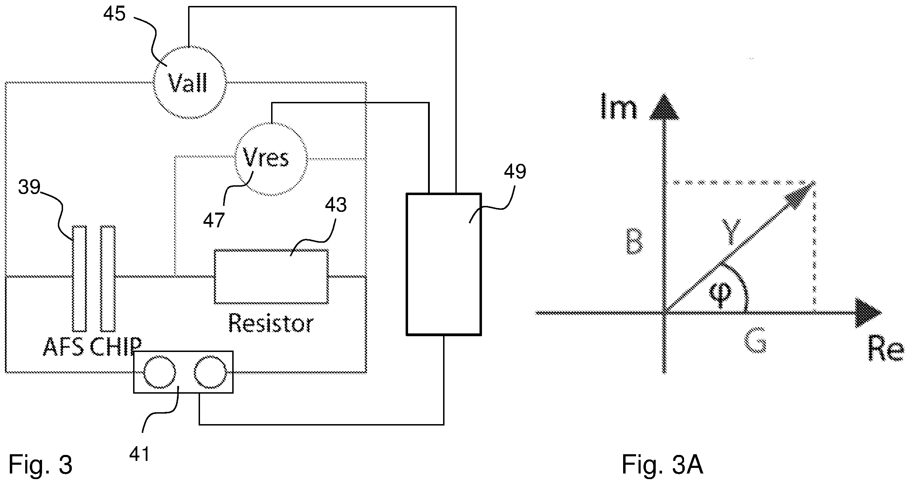

**Fig. 3** shows a simplified schematic circuit of an electrical setup of the system 1. Here, the sample holder 3 and acoustic wave generator 13 are considered together as a functional unit AFS Chip indicated at 39, having an impedance Z. A power supply 41 is provided for generating the periodic driving signal, having a signal frequency, a signal amplitude and a signal power. The power supply 41 is connected to the chip 39 in series with a reference resistor 43. Voltage measurement devices 45, 47 for measuring $V_{all}$ and $V_{res}$ are provided as indicated. The power supply 41 and voltage measurement devices 45, 47 are connected to a controller 49, which may comprise an analog-to-digital converter (ADC) and/or which may be connected with, or be part of, the controller 14 and/or the computer 25. $V_{chip}$, the voltage across the acoustic wave generator, can then also be calculated as $V_{chip} = V_{all} - V_{res}$.

When providing an oscillating driving voltage $V_{in}$ by the power supply 41 to the chip 39, a phase difference $\varphi$ between $V_{all}$ and $V_{res}$ will occur, which may be measurable. The following values may be determined (see also the complex phase diagram in **Fig. 3A):**

Impedance:

$$|Z| = (V_{chip}) \ R_{res}/V_{res}$$

Admittance:

$$|Y| = 1/|Z|$$

wherein

Complex admittance:

$$Y = |Y| \exp(-j\varphi) = G + jB$$

Susceptance:

$$B = |Y| \sin(-\varphi)$$

Conductance:

$$G = |Y| \cos(\varphi)$$

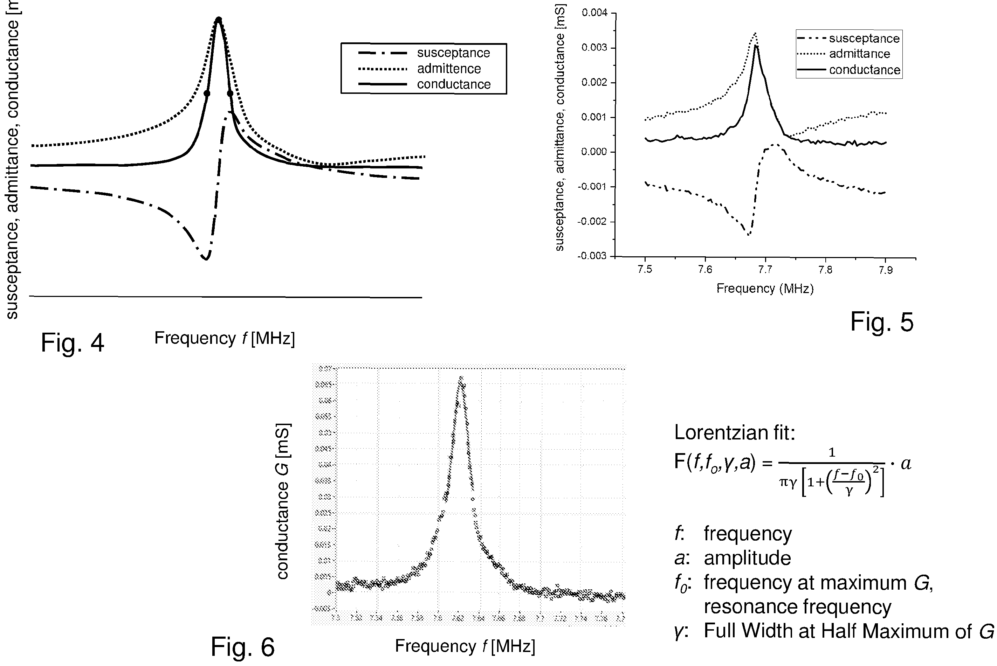

A frequency sweep, e.g. with a width of 0.5 MHz or some other suitable width, may be performed around a calculated resonance frequency. A resonance frequency $f_0$ is identified at the frequency $f$ where the conductance G is at a maximum, impedance $|Z|$ is at a minimum, admittance $|Y|$ is 0. Such case is indicated in **Fig. 4** showing from top to bottom admittance, conductance and susceptance versus frequency; the resonance peak has Full Width at Half Maximum value FWHM. **Figs. 5 and 6** show measured data of an exemplary sample holder. The resonance frequency and/ or FWHM-value of the resonance peak may be determined from determining extreme values $f_1$, $f_u$ of the susceptance B and/or from fitting the resonance peak with a suitable function, e.g. a Lorentzian fit as shown in **Fig. 6** and the corresponding fit-equation adjacent the graph.

The quality factor $Q$ of the chip resonance peak is determined as:
Quality factor:

$$Q = f_0 / (f_1 - f_u) = f_0 / FWHM = f_0 / \gamma$$

Thus, by measuring a suitable combination of properties of the sample holder and/or the system such as voltage, resistance, phase difference, impedance, admittance, conductance and/or susceptance for various frequencies and determining values thereof, the resonance frequency and/or the quality factor of the sample holder may be determined; note that presence of a sample in the sample holder and any properties of the sample may affect the resonance frequency and quality factor but these will likewise be determined.

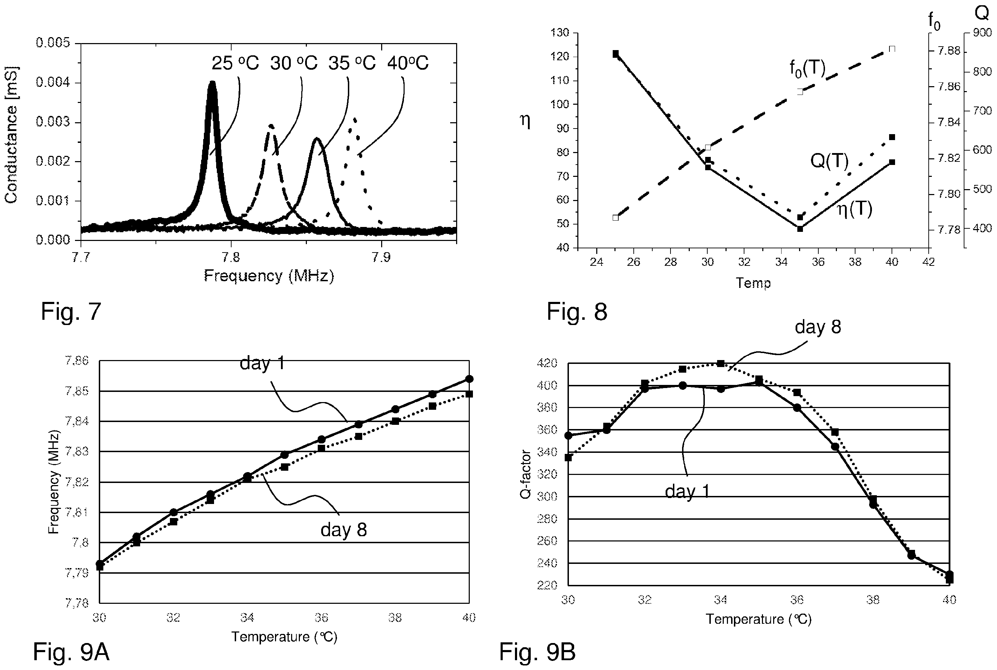

**Figs. 7-9** show exemplary measurements. **Fig. 7** shows that the position and shape of the conductance peak, meaning the resonance frequency $f_0$ and the system behaviour at a frequency at or near the resonance frequency $f_0$, is strongly dependent on temperature: $f_0 = f_0(T)$. Temperature changes may e.g. be due to one or more of environment, system, temperature control and force generation. **Fig. 8** shows a temperature dependency of the resonance frequency $f_0$ (T), the quality factor $Q(T)$ and an efficiency $\eta(T)$ for a chip. Here, the efficiency $\eta$, or rather $\eta(T)$, is defined as the average of the acoustic force. The efficiency may be provided as a general number but preferably it is defined as the average of the acoustic force on a specific test particle or plurality of test particles with specific (preferably known) properties such as size, density, compressibility, etc. at a given input power at the resonance frequency $f_0$ across a predetermined area or volume of the holding space of the studied chip, see also below. Clearly, the temperature dependency is large and requires careful consideration for experiments, in particular for quantitative experiments. **Figs. 9A and 9B** show the temperature dependency of the resonance frequency $f_0$ and the quality factor $Q$, respectively for a single chip as a function of temperature at two different days a week apart. Clearly, the overall temperature dependency of the resonance frequency $f_0$ (T) and the quality factor $Q(T)$ are the same, but the values differ. Several causes could attribute to such effects including aging of the sample and/or sample holder. Other parameters may be measured instead of or in combination with the Q-factor that also correlate with the efficiency $\eta$. For example one could measure the conductance at the resonance and/or the converted power (conductance * $V_{chip}^2$). Also any combination of such parameters may be used.

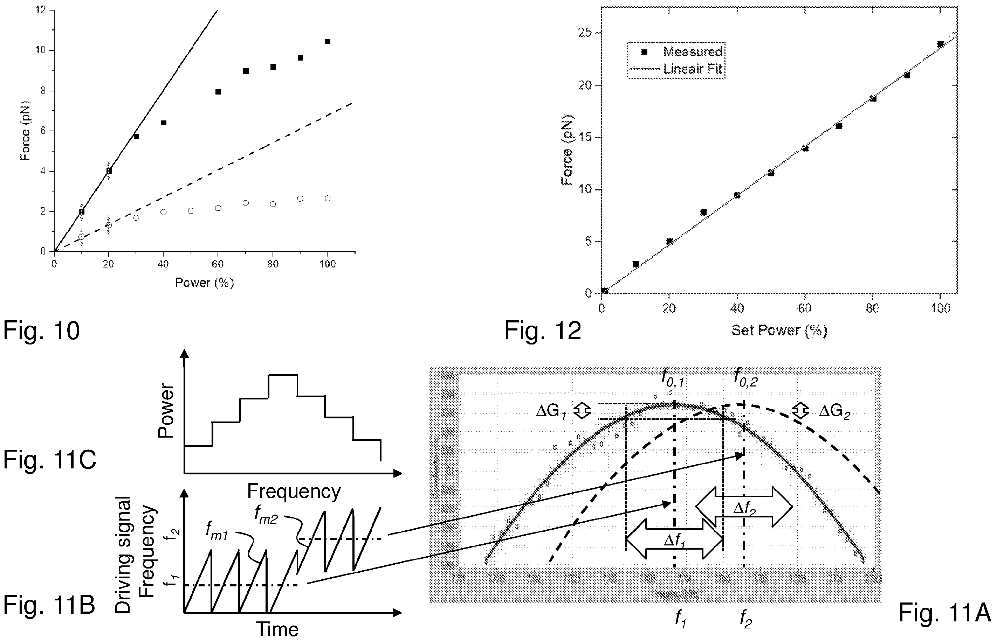

When operating the system an acoustic force on a sample particle may be determined. The force depends on the signal power, associated with the amplitude of the driving signal. It is noted that providing the driving signal to the sample holder causes energy dissipation in the (sample and) sample holder and, thus, heating of the sample, causing a shift of the resonance frequency increasing losses of the system **(Figs. 7-9B)**. Therefore a runaway process may occur. Indeed, **Fig. 10** shows that when operating the system at a constant frequency and different powers of the driving signal, the effective force on a particle in the sample holder does not scale with the applied force and may even be generally constant at higher forces. This behaviour is undesired and may negatively affect the predictability of any force on the particle.

**Fig. 11A** shows measured conductance data as a function of frequency, provided with a Lorenzian fit, see also **Fig. 6.** From the fit, a resonance frequency $f_{0,1}$ is determined. The signal frequency $f_1$ may be set at this resonance frequency $f_{0,1}$. Any deviation of the measured conductance $G$ may be used for adjustment of the signal frequency.

When an oscillating driving signal frequency $f_1$ is superposed with a modulation frequency $\Delta f_i$ a modulated signal frequency $f_{m1}$ is provided, as shown in **Fig. 11B** for a saw-tooth modulation. With such modulated signal frequency $f_{m1}$, the measured conductance will oscillate around its peak value by an amount $\Delta G_1$ as indicated in **Fig. 11A.** This conductance

oscillation $\Delta G_1$ may be measured and compared with one or more reference values, possibly an average value over recent measurements and/or a recent series of periods of the modulation frequency. In case the resonance frequency $f_{0,1}$ shifts, e.g. due to a temperature increase, the measured conductance $G$ (incl. $\Delta G_1$) will deviate accordingly. This deviation may be detected and may be used to signal change of the setup from desired set values, e.g. a temperature change of at least part of the sample. Also or alternatively, this deviation may be used as, or for, a feedback signal on the basis of which the central signal frequency $f_1$ may be adjusted to another value $f_2$ closer to the shifted resonance frequency $f_{0,2}$, as indicated in **Figs. 11A-11B.** Thus, the signal frequency $f$ is actively locked to the resonance frequency $f_0$. Depending on changes in the $Q$-factor of the resonance, the signal power may be adjusted, as indicated in **Fig. 11C.** The signal power may, also or alternatively, be adjusted depending on frequency matching of the signal frequency to the resonance frequency (one can decide to lock the applied force by adjusting the driving frequency or the driving amplitude). Note that any adjustments may be stepwise as indicated, or gradually. Note further that the amplitude and/ or width of the modulation frequency $\Delta f_1$, $\Delta f_2$ may also be adjusted, e.g. in response to an amplitude of the conductance modulation $\Delta G_1$, $\Delta G_2$, such as increasing the modulation frequency amplitude for a decreased conductance modulation amplitude and vice versa. Thus, a dynamic locking tightness may be achieved. Superposing of the modulation frequency on the driving frequency may be achieved in various ways, e.g. using a separate function generator for the modulation and combining this with the function generator of the driving signal or by generating the desired combined waveform directly from a single function generator.

**Fig. 12** shows the results of a repetition of an experiment of **Fig. 10,** using active signal frequency locking in accordance with **Figs. 11A-11C.** Clearly the relationship between power and measured force is substantially linear and predictable for the entire power range.

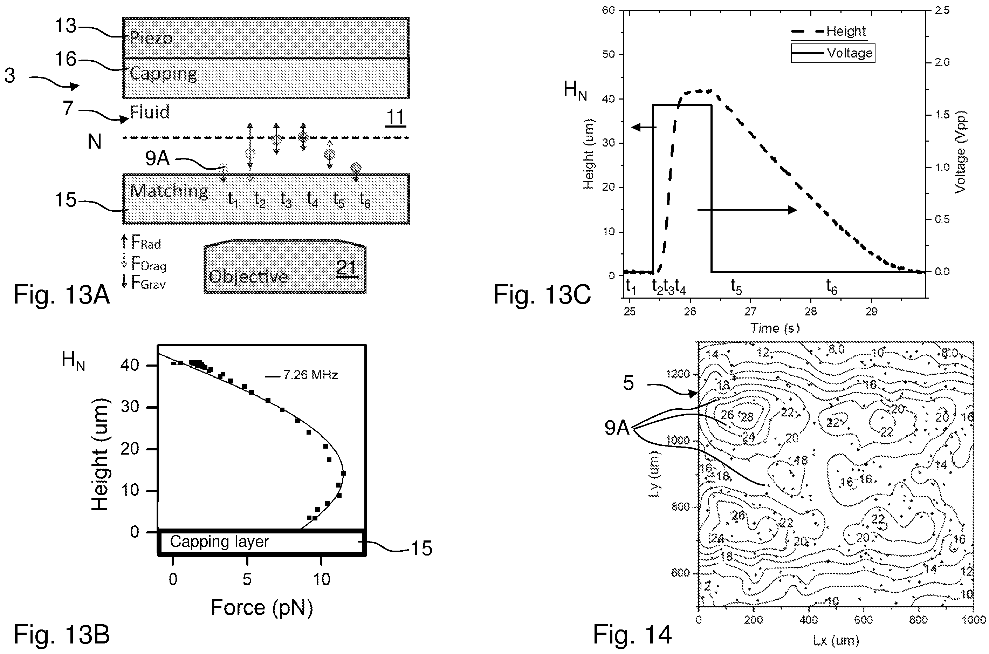

**Figs. 13A-13C** show a method of determining an acoustic force. **Fig. 13A** shows a cross-section of the sample holder including a microscope objective, like **Fig. 2A.** In the sample fluid 11 a test particle 9A is indicated. **Fig 13A** depicts a movement of the particle 9A subject to an acoustic force burst and forces acting on the particle in six points in time $t_1 \ldots t_6$. **Fig. 13B** shows the acoustic force as a function of height in the holding space between the surface of a wall 15 ("capping") of the sample holder (height = 0) and a node at height $H_N$ during the acoustic burst and measured particle positions. **Fig. 13C** shows the temporal behaviour of the driving signal burst Vpp (right axis) and the height of a particle in a sample holder (left axis).

$t_1$: no acoustic force is applied and the particle 9A is at rest on the surface of the wall of the sample holder (marked capping) under the influence of the net downward forces of gravity and buoyancy $F_{Grav} + F_{buoy}$;

$t_2$-$t_3$: an acoustic wave is generated in the sample holder providing a burst of acoustic force $F_{Rad}$ driving the particle 9A away from the surface towards the node (cf. **Fig. 2A).** When moving, the particle is now also subject to a drag force $F_{Drag}$ counteracting the movement and $F_{Rad} > (F_{Grav} + F_{buoy})$. The total force on the particle 9A is $F_{tot} = (F_{Grav} + F_{buoy}) + F_{Drag} + F_{Rad} > 0$ (i.e.: upward). Note that the acoustic force $F_{Rad}$ is position dependent, see **Fig. 13B,** and the drag force $F_{Drag}$ is velocity dependent (assuming a spatially and temporally homogeneous sample fluid).

$t_4$: the acoustic wave and hence the acoustic force is still present, but the particle 9A has come to rest at the node N; $F_{Drag} = 0$ and $F_{Rad} = (F_{Grav} + F_{buoy})$.

$t_5$: the driving signal is stopped, the acoustic wave and hence the acoustic force are absent. The particle 9A falls back to the wall 15, counteracted by the drag force $F_{Drag}$. $(F_{Grav} + F_{buoy}) > F_{Drag}$ and $F_{tot} = (F_{Grav} + F_{buoy}) + F_{Drag} < 0$ (i.e.: downward)

$t_6$: no acoustic force is applied and the particle 9A is again at rest on the surface of the wall of the sample holder (marked capping) under the influence of the net downward forces of gravity and buoyancy $F_{Grav} + F_{buoy}$.

The displacement of the particle 9A may be detected via the microscope using known image capturing techniques including video and/or other time-resolved methods (e.g. methods such as described in WO 2014/200341). The spatiotemporal displacement properties of the particle 9A through the sample fluid may be determined on the basis of the Navier-Stokes equations for the specific particle shape and size in combination with the properties of the fluid 11. By detecting the displacement velocity of the particle 9A the acoustic force may be determined; note that the same may hold for any lateral displacement of the particle 9A. **Fig. 13B** shows that an acoustic model (solid line) for a force on the test particle may be fitted to the data. This allows one or more of interpolation, extrapolation and determination of the force at any specific height between the capping layer and the node.

Using a repeating, possibly periodic, driving signal and possibly a small lateral force in one or two directions parallel to the surface and/or perpendicular to the direction of the acoustic force, an acoustic force in plural positions in the holding space distributed in one or two directions perpendicular to the acoustic force direction may be determined.

**Fig. 14** is a top view of a sample 7 in a holding space 5 with a large number of test particles 9A (black dots). In particular, the sample fluid was 1x PBS (Phosphate-buffered saline) solution supplemented with 0.02% w/v Pluronic f127 + 0.02% w/v Casein solution as a sample fluid and at a sample temperature in a range of 25-37 degrees Celsius, and the particles were silica beads of ca 10.1 micrometer diameter (standard deviation 0.1 micrometer).

Using a single driving signal burst / acoustic force burst as indicated with respect to **Figs. 13A-13C,** the force on all test particles 9A may be probed together, allowing establishing a force map exposing local force variations.

Using a repeating, possibly periodic, driving signal more data may be obtained and the map may become even more accurate and/or detailed. Given sufficient homogeneity of the test particles 9A, statistical information like averages, standard deviations of and/or local patterns and/or global patterns in the force distribution may be simply determined, otherwise averages and pattern may be (or: may have to be) calculated on the basis of results calculated independently for each of plural particles 9A to be included in the determination of the average and/or the pattern.

**Fig. 14** shows part of a force map of a sample holder. A force map as shown in **Fig. 14** has proven to be largely sample holder specific and largely constant over time. Cases of variations in the force map, e.g. variations in relative force and/or shifting of high-force-areas and/or low-force-areas, may indicate aging of the sample holder and/or development of sample properties (e.g. setting and/or denaturation of sample fluid, bubble formation). Data like the resonance frequency $f_0$ and/or quality factor $Q$ for one or more temperatures and/or the force map may be stored in a memory associated with the sample holder 3 and/or the chip 39 as a whole.

The average acoustic force for a specific test particle or the average acoustic energy density over a certain volume or area A of the field of view for a given signal power may be determined as an efficiency $\eta$ for the chip, e.g. an area A = $L_X$ x $L_Y$ as shown in **Fig. 14.** The efficiency $\eta$ may be determined for several regions of interest and/or for several operating conditions such as e.g. temperature (see **Fig. 8**). For example, an efficiency of a chip may be determined by using test beads to determine local acoustic forces in the chip according to the method described above in reference to Figs. 13A-13C and Fig 14. In a particular field-of-view of the microscope there may be, for example, ca 200 randomly distributed beads for which a force can be determined based on their spatiotemporal behavior after application one or more force pulses. An average force $F_{avg}$ experienced by all the beads considered may then be calculated, possibly using a weighing factor and/or other measures to correct for (uneven) distribution of the beads. The efficiency $\eta$ may then be defined as the average force per unit of signal power (e.g. power, wherein power may be $V^2$ of a driving voltage V over a piezo-element): $\eta = F_{avg}$ / $P$. Typically the unit of power is a percentage of a maximum rated power for the chip and/or the acoustic wave generator (e.g. a piezo element). If desired, the efficiency may be defined as an average of plural determinations of $F_{avg}$ and/or $P$. Other ways to define a chip efficiency for suitable characterisation and/or calibration may be apparent to the reader.

For several chips operated at sufficiently equal conditions, in particular with respect to one or more of acoustic wave input power, resonance frequency $f_0$, temperature, and sample compositions and -conditions therein, efficiencies $\eta_i$ for different chips *i* may be compared.

Based on a force map of at least a portion of an active region of a sample holder, being the region in which the acoustic standing wave is produced, one can select an desired measurement region based on for example an maximum average force over the region and/or a particular homogeneity of the force over the measurement region. Coordinates and/or other properties of such measurement region may be stored on the chip or in a database from which the coordinates and/or properties may be retrieved, e.g. based on a unique chip identifier. In such case it is beneficial if the measurement system is arranged for deterministically positioning the measurement region of the chip at the correct coordinates, e.g. by a particular sample holder mount and/or an active positioning control system.

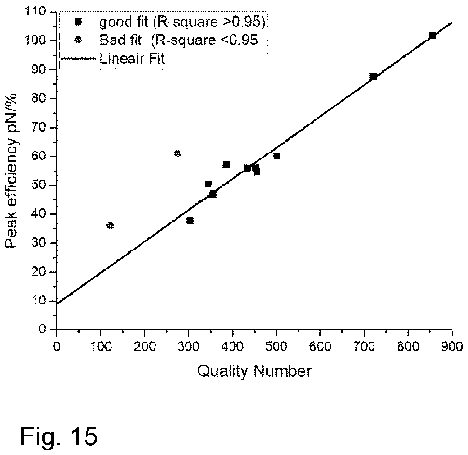

It has been found that the quality factor $Q$ and the efficiency $\eta$ are closely related. For a given set of operating conditions (e.g. temperature, sample composition, driving signal etc.) a linear relationship with a high correlation has been found between the quality factor Q and the efficiency $\eta$ of the acoustic force of several chips 39 of a given type; see **Table 1** and **Fig. 15.** This allows prediction of the acoustic force for a particular chip on the basis of the quality number Q. Moreover, it has been found that any chip outside a specific Quality factor range and/or correlation reliability confidence interval may be rejected for further use.

Next to the value determined for the Q-factor other parameters such as for example the quality of the Lorentzian fit e.g. given by the $R^2$ value may be used to reject measurements and/or sample holders/chips. For example a chip with a high $Q$-factor but a low $R^2$ value may be rejected because the force applied with such a chip to the sample may be less predictable. Indeed, in **Table 1** and **Fig. 15** two specimens are found to be outliers which may be rejected.

Table 1: quality number, R2 value and peak efficiency, of several sample holders ("flow cell")

| Flow cell | Quality number | $R^2$ | Peak efficiency |
|---|---|---|---|
| B0220019 | 452 | 1.00 | 56 |
| *B0120012* | *121* | *0.70* | *36* |
| B0220006 | 855 | 0.97 | 102 |
| B0320012 | 434 | 0.97 | 56 |
| B0320011 | 303 | 0.98 | 38 |
| *B0220018* | *275* | *0.87* | *61* |
| B0220009 | 720 | 1.00 | 88 |

(continued)

| Flow cell | Quality number | $R^2$ | Peak efficiency |
|---|---|---|---|
| B03_0022 | 455 | 0.99 | 54.60 |
| B03_0023 | 344 | 0.96 | 50.51 |
| B03_0024 | 500 | 1.00 | 60.18 |
| B03_0029 | 385 | 1.00 | 57.23 |
| B03_0033 | 355 | 1.00 | 47.03 |

Different correlation relations between the quality factor and other parameters may be determined as well and be used similarly, e.g. a relation between quality number and variation of quality number over time and/or temperature (cf. Figs. 8-9B).

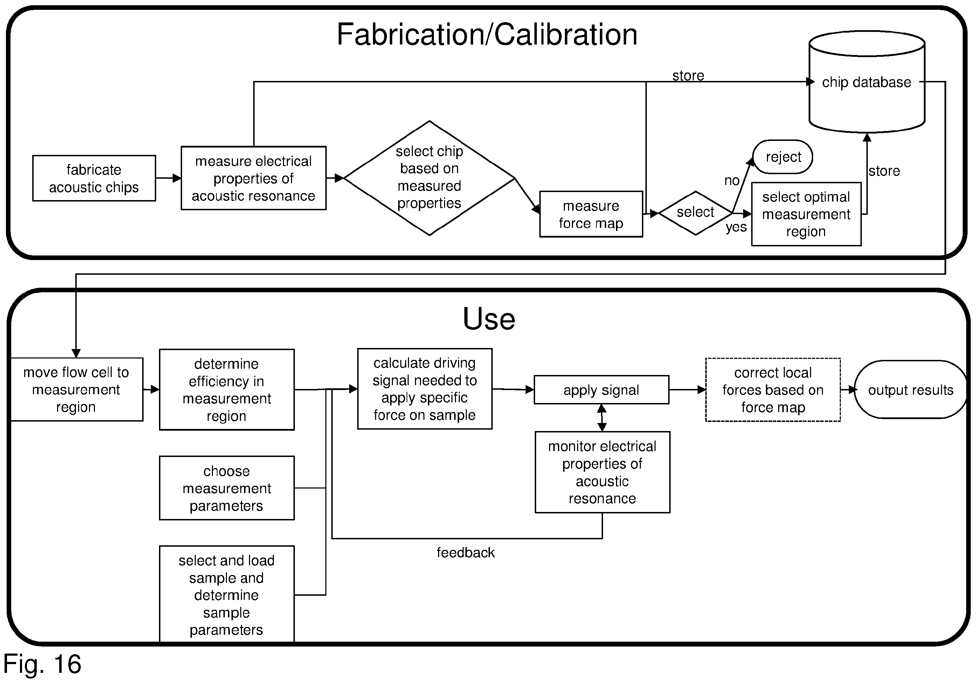

**Fig. 16.** Shows a flow diagram of a process for chip fabrication, selection and use in accordance with the present concepts. Sample holders, here called chips, may be produced according to a certain fabrication process. For each assembled chip electrical properties are measured according to one or more embodiments of the methods described above and properties of an acoustic resonance are determined in order to determine the quality of the acoustic reference. Experimental conditions during such measurements (e.g. sample medium, sample, temperature, etc.) may be standardized for some or all measurements. Results from such measurements may be stored in an on-chip memory and/or in a chip database where they can later be retrieved, e.g. based on a unique chip identifier.

In an example, if there is any prior knowledge stored in the database about a correlation of the resonance quality and a chip efficiency, a selection can be performed based on this information to decide whether the chip is good or not. If the chip is considered not good the chip may be rejected, if the chip is considered good the chip may be selected for further use.

If a chip is thus selected, a force map may be determined for the chip according to the methods described above. Such methods may involve a longer and/or more difficult and/or more expensive measurement than the electrical measurement. So, by pre-selection based on the electrical measurement, a lot of time and cost may be saved.

Based on the force map, selection or rejection of a chip may be reconsidered. Also or alternatively a preferred region for one or more measurements may be determined. Such preferred region may for example be a region with maximum average force or with the least (or rather the most) variation in force. Also the force map and/or the coordinates of the preferred region may be stored in the on-chip memory and/or in the chip database. Such information may be used to find a correlation between the electrical properties and the chip efficiency and/or to improve one or more previously established correlation relations.

For using the chip in a measurement and/or manipulation of a sample, the chip may be included in a measurement system wherein the measurement system may position the chip such that a measurement region and/or field of view coincides with the preferred region. Also or alternatively, an efficiency may be calculated for the measurement region when positioned in the measurement system.

A sample comprising sample fluid and one or more sample particles may be chosen and loaded onto the chip (i.e. provided into the holding space of the sample holder) prior to or after such positioning and sample parameters (e.g. particle size, density, compressibility, medium density, temperature, etc.) may be known or determined. Measurement parameters may be chosen associated with one or more of sample properties and/or predetermined measurements and/or manipulations. For example, a desired force or force ramp to be applied to the sample may be chosen. Based on one or more of the sample properties, measurement parameters, the chip efficiency and resonance quality, a driving signal for achieving the desired measurement parameters may be calculated. The driving signal may be applied and the electrical parameters of the acoustic resonance may be monitored, which may be simultaneously. The electrical parameters may be used to update the driving signal during the experiment in a feedback loop to establish and/or maintain the desired measurement parameters.

During or after such measurement a relevant portion of the force map of the sample holder may optionally be used to correct force measurements that occurred during the experiment to improve an accuracy of these force measurements. Also or alternatively, one or more measurement results may be recorded and stored in a memory and/or other database for future reference and/or adjustment of sample holder characteristics like a force map and/or a correlation relation.

Measurement results (e.g. a curve showing a number of cellular bodies bound to the functionalised layer vs applied force) may be stored and/or displayed to the user, possibly after some further processing.

As is clear from the description above, this process can be used both to optimize, monitor and/or maintain quality of production of chips as well as for obtaining more accurate and reproducible experimental data.

Further, unless otherwise specified, terms like "detachable" and "removably connected" are intended to mean that respective parts may be disconnected essentially without damage or destruction of either part, e.g. excluding structures in which the parts are integral (e.g. welded or molded as one piece), but including structures in which parts are attached by or as mated connectors, fasteners, releasable self-fastening features, etc. The verb "to facilitate" is intended to mean "to make easier and/or less complicated", rather than "to enable".

The disclosure is not restricted to the above described embodiments which can be varied in a number of ways within the scope of the claims.

For instance, resonance features may be determined by measuring an impulse response in the time domain and Fourier transforming to the frequency domain. This could potentially speed up the locking and calibration. Measurements of the electrical properties of the resonance may also be performed using a standard vector network analyzer (VNA).

Various embodiments, in particular of method of measurement, determination and/or calculation, may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored.

Elements and aspects discussed for or in relation with a particular embodiment may be suitably combined with elements and aspects of other embodiments, unless explicitly stated otherwise.

**Claims**

1.  A method comprising the steps of:

    providing a sample holder (3) comprising a holding space (5) for holding a sample comprising a particle (9) in a fluid medium (11);
    providing a driving signal, having a signal frequency ($f$), a signal amplitude and a signal power ($P$), to the sample holder (3) generating an acoustic wave in the sample holder (3) for applying an acoustic force to the particle (9), the wave having a frequency; and
    determining an acoustic resonance frequency ($f_0$) of the sample holder (3);
    wherein the method further comprises the steps of:

    determining a quality factor (Q) for the sample holder (3) with respect to the resonance frequency ($f_0$); and
    based on the quality factor (Q) at least one of:

    determining suitability of the sample holder for further use,
    determining an acoustic force ($F$) in at least part of the sample holder (3), and
    controlling at least one of the signal frequency ($f$), a signal amplitude ($a$), a signal power, a sample composition of the sample in the holding space (5) and a temperature (7) of at least part of the sample and/or the sample holder (3).

2.  The method according to claim 1, comprising the further steps of:

    selecting at least one property of the sample holder (3) selected from a group consisting of a voltage drop, an impedance, an admittance (Y), a susceptance (B), a conductance (G) and a signal phase shift ($\varphi$);
    determining a value of the selected property at a plurality of signal frequencies ($f$) in a signal frequency range; and
    determining the resonance frequency ($f_0$) and/or the quality factor on the basis of the selected property.

3.  The method according to claim 1 or 2, comprising the steps of:

    providing a sample holder (3) comprising a holding space (5) for holding a sample comprising a particle (9) in a fluid medium (11);
    providing a driving signal, having a signal frequency ($f$), a signal amplitude ($a$) and a signal power ($P$), to the sample holder (3) generating an acoustic wave in the sample holder (3) for applying an acoustic force ($F$) to the particle (9), the wave having a frequency; and
    determining an acoustic resonance frequency ($f_0$) of the sample holder;

wherein the method further comprises the steps of:

determining a frequency difference between the signal frequency ($f$) and the resonance frequency ($f_0$), and providing a feedback signal for adjusting the signal frequency in dependence of the frequency difference, and the further step of adjusting the signal frequency on the basis of the feedback signal.

4. The method according to claim 3, comprising superposing a modulation frequency ($f_m$) on the signal frequency ($f$), thus providing a modulated signal frequency,

wherein the step of determining a frequency difference between the signal frequency ($f$) and the resonance frequency ($f_0$) comprises determining the frequency difference with respect to the modulated signal frequency and the resonance frequency ($f_0$), and
wherein the method further comprises:

adjusting the modulation frequency ($f_m$) and/or the signal frequency ($f$) in dependence of the frequency difference, and/or
adjusting the modulation frequency ($f_m$) and/or the signal frequency ($f$) on the basis of the feedback signal.

5. The method according to any preceding claim, comprising the steps of:

providing a sample holder (3) comprising a holding space (5) for holding a particle (9) in a fluid medium (11);
providing a repeating, possibly periodic, driving signal, having a signal frequency ($f$), a signal amplitude ($a$) and a signal power ($P$), to the sample holder (3) generating an acoustic wave in the sample holder for applying an acoustic force ($F$) to the particle in a first direction, the wave having a frequency ($f$);
wherein the method further comprises, for at least one frequency, determining an acoustic force ($F$) in each of plural positions in the holding space (5) distributed in at least one or two directions perpendicular to the first direction.

6. The method according to any preceding claim, comprising:
storing in a memory (M) at least one of:

frequency data representing resonance frequency information of the sample holder (3),
quality-factor data representing quality-factor information of the sample holder (3), and
force data representing at least one of:

the acoustic force ($F$) in plural positions in the holding space (5), and the spatial force distribution of at least part of the holding space (5);
wherein the memory (M) is comprised in a machine readable medium, and
wherein the method may comprise providing the sample holder (3) with the memory (M) and/or with an identifier for accessing and/or retrieving from the memory the stored frequency data and/or quality-factor data and/or force data.

7. The method according to any preceding claim, comprising determining an acoustic force in plural positions in the holding space (5) in parallel.

8. The method according to claim 7, comprising providing the sample holder (3) with a sample comprising a plurality of particles (9) in a fluid medium (11),

providing the driving signal to the sample holder (3) generating an acoustic wave in the sample holder (3) and applying an acoustic force to the plurality of particles (9),
monitoring spatiotemporal behaviour of the particles (9) with respect to at least part of the sample holder (3), and
determining an acoustic force ($F$) for each particle (9) on the basis of at least part of the monitored spatiotemporal behaviour of the respective particle.

9. The method according to claim 7 or 8, comprising providing the driving signal to generate a time-varying, e.g. pulsed, acoustic force and monitoring spatiotemporal behaviour of the particles (9) with respect to at least one acoustic force variation e.g. at least one acoustic force pulse.

**10.** The method according to any preceding claim, comprising the further steps of:
providing the sample holder (3) with a plurality of particles (9) in a fluid medium (11), and determining a size of at least some of the particles.

**11.** The method according to claim 10, comprising one or more of:

- the plurality of particles (9) having a size distribution with a mean size and a standard deviation of less than 10% of the mean size;
- the particles (9) being spherical having a mean diametrical size in a range of 5-25 micrometer;
- the particles (9) having a density distribution with a mean density and a standard deviation of less than 10% of the mean density; and
- the particles (9) having an average density differing from an average density of the sample fluid in the holding space by 2-10%.

**12.** The method according to any preceding claim, wherein the method further comprises, for at least one frequency ($f$),

applying the acoustic force ($F$) in a first direction and determining an acoustic force ($F$) in each of plural positions in the holding space (5) distributed in at least one or two directions perpendicular to the first direction; determining for at least part of the sample holder (3) at least one of:

- an average force of the determined acoustic forces associated with that part of the sample holder (3),
- a standard deviation of the determined acoustic forces associated with that part of the sample holder (3),
- a difference between a determined acoustic force and the average force; and
- a correlation value relating the average force to the quality factor ($Q$); and

determining based on at least one of the average force, the difference, the standard deviation and the correlation value, suitability of the sample holder (3) for use in a method for manipulating a particle (9), in particular for further and/or repeated use in the method of any preceding claim.

**13.** A method comprising performing the method of any preceding claim on a plurality of sample holders (3), including for each sample holder (3) of the plurality of sample holders (3) at least the steps of:

determining a quality factor ($Q$) for the respective sample holder (3) with respect to the resonance frequency ($f_0$) of the sample holder (3); and
determining at least one of an acoustic force, an average acoustic force in at least part of the respective sample holder (3), and an efficiency value ($\eta$), wherein the efficiency value ($\eta$) is defined as the average of the acoustic force;
the method further comprising the step of determining a correlation relation between the thus determined quality factors ($Q$) and the at least one of the acoustic forces, the average acoustic forces and the efficiency values ($\eta$).

**14.** The method according to claim 13, comprising

providing a further sample holder (3), performing the method of any preceding clause using the further sample holder (3) comprising determining a quality factor ($Q$) for the further sample holder (3) with respect to its resonance frequency ($f_0$), and
determining at least one of an acoustic force, an average acoustic force in at least part of the further sample holder (3) and an efficiency value ($\eta$);
wherein the method further comprises determining suitability of the further sample holder (3) for further use based on a relationship between the correlation relation and the thus of the further sample holder determined quality factor ($Q$) and the at least one of the acoustic force, the average acoustic force and the efficiency value ($\eta$).

**15.** Method according to any preceding claim, comprising manipulating a particle comprising

providing a second particle (9) in a sample fluid (11) in the holding space (5) of the sample holder (3), possibly a second sample,
providing a second driving signal, having a second signal frequency ($f$), a second signal amplitude ($a$) and a second signal power ($P$), to the signal holder (3) generating a second acoustic wave in the sample holder for applying a second acoustic force ($F$) to the particle, the second wave having a second frequency ($f$);

determining an acoustic force ($F$) on the second particle (9) on the basis of at least one of:

the quality factor ($Q$) of the sample holder (3), and
when dependent of claim 5, the acoustic force in a position in the holding space (5) at or near a position of the second particle (9), and/or the spatial force distribution in at least part of the sample holder (3), and, when dependent of claim 13 the correlation relation.

**Patentansprüche**

1. Verfahren, das die Schritte aufweist:

   Bereitstellen eines Probenhalters (3), der einen Halteraum (5) zum Halten einer Probe aufweist, die ein Partikel (9) in einem Fluidmedium (11) aufweist;
   Bereitstellen eines Treibersignals mit einer Signalfrequenz ($f$), einer Signalamplitude und einer Signalleistung ($P$) an den Probenhalter (3), um eine akustische Welle in dem Probenhalter (3) zum Ausüben einer akustischen Kraft auf das Partikel (9) zu erzeugen, wobei die Welle eine Frequenz aufweist; und
   Bestimmen einer akustischen Resonanzfrequenz ($f_0$) des Probenhalters (3); wobei das Verfahren weiterhin die Schritte aufweist:
   Bestimmen eines Qualitätsfaktors ($Q$) für den Probenhalter (3) bezüglich der Resonanzfrequenz ($f_0$); und basierend auf dem Qualitätsfaktor ($Q$) zumindest eines von Folgendem:

   Bestimmen einer Geeignetheit des Probenhalters zur weiteren Verwendung,
   Bestimmen einer akustischen Kraft ($F$) in zumindest einem Teil des Probenhalters (3), und
   Steuern zumindest eines von Folgendem: der Signalfrequenz ($f$), einer Signalamplitude ($a$), einer Signalleistung, einer Probenzusammensetzung der Probe in dem Halteraum (5) und einer Temperatur ($T$) zumindest eines Teils der Probe und/oder des Probenhalters (3).

2. Verfahren nach Anspruch 1, das die weiteren Schritte aufweist:

   Auswählen zumindest einer Eigenschaft des Probenhalters (3), die aus einer Gruppe ausgewählt ist, die aus einem Spannungsabfall, einer Impedanz, einer Admittanz (Y), einer Suszeptanz (B), einer Leitfähigkeit (G) und einer Signalphasenverschiebung ($\varphi$) besteht;
   Bestimmen eines Wertes der ausgewählten Eigenschaft bei einer Mehrzahl von Signalfrequenzen ($f$) in einem Signalfrequenzbereich; und
   Bestimmen der Resonanzfrequenz ($f_0$) und/oder des Qualitätsfaktors auf der Basis der ausgewählten Eigenschaft.

3. Verfahren nach Anspruch 1 oder 2, das die Schritte aufweist:

   Bereitstellen eines Probenhalters (3), der einen Halteraum (5) zum Halten einer Probe aufweist, die ein Partikel (9) in einem Fluidmedium (11) aufweist;
   Bereitstellen eines Treibersignals mit einer Signalfrequenz ($f$), einer Signalamplitude ($a$) und einer Signalleistung ($P$) an den Probenhalter (3), um eine akustische Welle in dem Probenhalter (3) zum Ausüben einer akustischen Kraft ($F$) auf das Partikel (9) zu erzeugen, wobei die Welle eine Frequenz aufweist; und
   Bestimmen einer akustischen Resonanzfrequenz ($f_0$) des Probenhalters;
   wobei das Verfahren weiterhin die Schritte aufweist:

   Bestimmen einer Frequenzdifferenz zwischen der Signalfrequenz ($f$) und der Resonanzfrequenz ($f_0$), und
   Bereitstellen eines Rückkopplungssignals zum Einstellen der Signalfrequenz in Abhängigkeit von der Frequenzdifferenz, und den weiteren Schritt eines Einstellens der Signalfrequenz auf der Basis des Rückkopplungssignals.

4. Verfahren nach Anspruch 3, das ein Überlagern einer Modulationsfrequenz ($f_m$) auf die Signalfrequenz ($f$) aufweist, um somit eine modulierte Signalfrequenz bereitzustellen,

   wobei der Schritt des Bestimmens einer Frequenzdifferenz zwischen der Signalfrequenz ($f$) und der Resonanzfrequenz ($f_0$) ein Bestimmen der Frequenzdifferenz bezüglich der modulierten Signalfrequenz und der Reso-

nanzfrequenz ($f_0$) aufweist, und
wobei das Verfahren weiterhin aufweist:

> Einstellen der Modulationsfrequenz ($f_m$) und/oder der Signalfrequenz ($f$) in Abhängigkeit der Frequenzdifferenz, und/oder
> Einstellen der Modulationsfrequenz ($f_m$) und/oder der Signalfrequenz ($f$) auf der Basis des Rückkopplungssignals.

5. Verfahren nach irgendeinem vorhergehenden Anspruch, das die Schritte aufweist:

> Bereitstellen eines Probenhalters (3), der einen Halteraum (5) zum Halten eines Partikels (9) in einem Fluidmedium (11) aufweist;
> Bereitstellen eines sich wiederholenden, ggf. periodischen, Treibersignals mit einer Signalfrequenz ($f$), einer Signalamplitude ($a$) und einer Signalleistung ($P$) an den Probenhalter (3), um eine akustische Welle in dem Probenhalter zum Ausüben einer akustischen Kraft ($F$) auf das Partikel in einer ersten Richtung zu erzeugen, wobei die Welle eine Frequenz ($f$) aufweist;
> wobei das Verfahren weiterhin für zumindest eine Frequenz ein Bestimmen einer akustischen Kraft ($F$) in jeder einer Mehrzahl an Positionen in dem Halteraum (5) aufweist, die in zumindest einer oder zwei Richtungen senkrecht zu der ersten Richtung verteilt sind.

6. Verfahren nach irgendeinem vorhergehenden Anspruch, das aufweist:
Speichern in einem Speicher (M) zumindest eines von Folgendem:

> Frequenzdaten, die Resonanzfrequenzinformation des Probenhalters (3) repräsentieren,
> Qualitätsfaktordaten, die Qualitätsfaktorinformation des Probenhalters (3) repräsentieren, und
> Kraftdaten, die zumindest eines von Folgendem repräsentieren:
>
>> die akustische Kraft ($F$) in mehreren Positionen in dem Halteraum (5) und die räumliche Kraftverteilung zumindest eines Teils des Halteraums (5);
>> wobei der Speicher (M) in einem maschinenlesbaren Medium enthalten ist, und
>> wobei das Verfahren ein Bereitstellen des Probenhalters (3) mit dem Speicher (M) und/oder mit einem Identifikator zum Zugreifen auf und/oder Abrufen der gespeicherten Frequenzdaten und/oder Qualitätsfaktordaten und/oder Kraftdaten aufweisen kann.

7. Verfahren nach irgendeinem vorhergehenden Anspruch, das ein Bestimmen einer akustischen Kraft parallel in mehreren Positionen in dem Halteraum (5) aufweist.

8. Verfahren nach Anspruch 7, das aufweist: Bereitstellen des Probenhalters (3) mit einer Probe, die eine Mehrzahl von Partikeln (9) in einem Fluidmedium (11) aufweist,

> Bereitstellen des Treibersignals an den Probenhalter (3), um eine akustische Welle in dem Probenhalter (3) zu erzeugen und eine akustische Kraft auf die Mehrzahl von Partikeln (9) auszuüben,
> Überwachen eines räumlich-zeitlichen Verhaltens der Partikel (9) bezüglich zumindest eines Teils des Probenhalters (3), und
> Bestimmen einer akustischen Kraft ($F$) für jedes Partikel (9) auf der Basis zumindest eines Teils des überwachten räumlich-zeitlichen Verhaltens des jeweiligen Partikels.

9. Verfahren nach Anspruch 7 oder 8, das ein Bereitstellen des Treibersignals aufweist, um eine zeitlich variierende, bspw. gepulste, akustische Kraft zu erzeugen, und Überwachen des räumlich-zeitlichen Verhaltens der Partikel (9) bezüglich zumindest einer akustischen Kraftvariation, bspw. zumindest eines akustischen Kraftpulses.

10. Verfahren nach irgendeinem vorhergehenden Anspruch, das die weiteren Schritte aufweist:
Bereitstellen des Probenhalters (3) mit einer Mehrzahl von Partikeln (9) in einem Fluidmedium (11) und Bestimmen einer Größe zumindest einiger der Partikel.

11. Verfahren nach Anspruch 10, das eines oder mehreres von Folgendem aufweist:

> - die Mehrzahl an Partikeln (9) weisen eine Größenverteilung mit einer mittleren Größe und einer Standardabweichung von weniger als 10 % der mittleren Größe auf;
- die Partikel (9) sind kugelförmig mit einer mittleren Durchmessergröße in einem Bereich von 5-25 Mikrometern;
- die Partikel (9) weisen eine Dichteverteilung mit einer mittleren Dichte und einer Standardabweichung von weniger als 10 % der mittleren Dichte auf; und
- die Partikel (9) weisen eine durchschnittliche Dichte auf, die sich von einer durchschnittlichen Dichte des Probenfluids in dem Halteraum um 2-10 % unterscheidet.

12. Verfahren nach irgendeinem vorhergehenden Anspruch, wobei das Verfahren weiterhin aufweist, zumindest für eine Frequenz ($f$),

Ausüben der akustischen Kraft ($F$) in einer ersten Richtung und Bestimmen einer akustischen Kraft ($F$) in jeder einer Mehrzahl von Positionen in dem Halteraum (5), die in zumindest einer oder zwei Richtungen senkrecht zu der ersten Richtung verteilt sind; Bestimmen, für zumindest einen Teil des Probenhalters (3), zumindest eines von Folgendem:

- einer Durchschnittskraft der bestimmten akustischen Kräfte, die mit diesem Teil des Probenhalters (3) verknüpft sind,
- einer Standardabweichung der bestimmten akustischen Kräfte, die mit diesem Teil des Probenhalters (3) verknüpft sind,
- einer Differenz zwischen einer bestimmten akustischen Kraft und der Durchschnittskraft; und
- eines Korrelationswertes, der die Durchschnittskraft mit dem Qualitätsfaktor ($Q$) in Relation setzt; und

Bestimmen, basierend auf zumindest einem von der Durchschnittskraft, der Differenz, der Standardabweichung und des Korrelationswertes, der Geeignetheit des Probenhalters (3) zur Verwendung in einem Verfahren zum Manipulieren eines Partikels (9), insbesondere zur weiteren und/oder wiederholten Verwendung in dem Verfahren nach irgendeinem vorhergehenden Anspruch.

13. Verfahren, das die Durchführung des Verfahrens nach irgendeinem vorhergehenden Anspruch an einer Mehrzahl von Probenhaltern (3) aufweist, einschließlich für jeden Probenhalter (3) der Mehrzahl an Probenhaltern (3) zumindest die Schritte:

Bestimmen eines Qualitätsfaktors ($Q$) für den jeweiligen Probenhalter (3) bezüglich der Resonanzfrequenz ($f_0$) des Probenhalters (3); und
Bestimmen zumindest eines von Folgendem: einer akustischen Kraft, einer durchschnittlichen akustischen Kraft in zumindest einem Teil des jeweiligen Probenhalters (3), und eines Effizienzwertes ($\eta$), wobei der Effizienzwert ($\eta$) als der Durchschnitt der akustischen Kraft definiert ist;
wobei das Verfahren weiterhin den Schritt eines Bestimmens einer Korrelationsbeziehung zwischen den so bestimmten Qualitätsfaktoren ($Q$) und zumindest einem von den akustischen Kräften, den durchschnittlichen akustischen Kräften und den Effizienzwerten ($\eta$) aufweist.

14. Verfahren nach Anspruch 13, das aufweist

Bereitstellen eines weiteren Probenhalters (3), Durchführen des Verfahrens nach irgendeinem vorhergehenden Anspruch unter Verwendung des weiteren Probenhalters (3), das ein Bestimmen eines Qualitätsfaktors ($Q$) für den weiteren Probenhalter (3) bezüglich seiner Resonanzfrequenz ($f_0$) aufweist, und
Bestimmen zumindest eines von Folgendem: einer akustischen Kraft, einer durchschnittlichen akustischen Kraft in zumindest einem Teil des weiteren Probenhalters (3) und eines Effizienzwertes ($\eta$);
wobei das Verfahren weiterhin ein Bestimmen einer Geeignetheit des weiteren Probenhalters (3) zur weiteren Verwendung basierend auf einer Beziehung zwischen der Korrelationsbeziehung und dem somit für den weiteren Probenhalter bestimmten Qualitätsfaktor ($Q$) und dem zumindest einem von der akustischen Kraft, der durchschnittlichen akustischen Kraft und dem Effizienzwert ($\eta$) aufweist.

15. Verfahren nach irgendeinem vorhergehenden Anspruch, das ein Manipulieren eines Partikels aufweist, und das aufweist:

Bereitstellen eines zweiten Partikels (9) in einem Probenfluid (11) in dem Halteraum (5) des Probenhalters (3), ggf. eine zweite Probe,
Bereitstellen eines zweiten Treibersignals mit einer zweiten Signalfrequenz ($f$), einer zweiten Signalamplitude ($a$)

und einer zweiten Signalleistung (*P*) an den Probenhalter (3), um eine zweite akustische Welle in dem Probenhalter zum Ausüben einer zweiten akustischen Kraft (*F*) auf das Partikel zu erzeugen, wobei die zweite Welle eine zweite Frequenz (*f*) aufweist;

Bestimmen einer akustischen Kraft (*F*) auf das zweite Partikel (9) auf der Basis von zumindest einem von:

dem Qualitätsfaktor (*Q*) des Probenhalters (3), und

wenn von Anspruch 5 abhängig, der akustischen Kraft in einer Position in dem Halteraum (5) an oder nahe einer Position des zweiten Partikels (9) und/oder der räumlichen Kraftverteilung in zumindest einem Teil des Probenhalters (3), und,

wenn von Anspruch 13 abhängig, der Korrelationsbeziehung.

**Revendications**

1. Procédé comprenant les étapes de :

fourniture d'un porte-échantillon (3) comprenant un espace de support (5) pour porter un échantillon comprenant une particule (9) dans un milieu fluide (11) ;

fourniture d'un signal d'excitation, ayant une fréquence de signal (*f*), une amplitude de signal et une puissance de signal (P), au porte-échantillon (3) générant une onde acoustique dans le porte-échantillon (3) pour appliquer une force acoustique à la particule (9), l'onde ayant une fréquence ; et

détermination d'une fréquence de résonance acoustique ($f_0$) du porte-échantillon (3) ;

dans lequel le procédé comprend en outre les étapes de :

détermination d'un facteur de qualité (Q) pour le porte-échantillon (3) par rapport à la fréquence de résonance ($f_0$) ; et

sur la base du facteur de qualité (Q), au moins l'une parmi :

la détermination de l'adéquation du porte-échantillon pour une utilisation ultérieure,

la détermination d'une force acoustique (F) dans au moins une partie du porte-échantillon (3), et

la commande d'au moins l'une parmi la fréquence de signal (*f*), une amplitude de signal (a), une puissance de signal, une composition d'échantillon de l'échantillon dans l'espace de support (5) et une température (7) d'au moins une partie de l'échantillon et/ou du porte-échantillon (3).

2. Procédé selon la revendication 1, comprenant les étapes supplémentaires de :

sélection d'au moins une propriété du porte-échantillon (3) sélectionnée parmi un groupe constitué d'une chute de tension, d'une impédance, d'une admittance (Y), d'une susceptance (B), d'une conductance (G) et d'un déphasage de signal ($\varphi$) ;

détermination d'une valeur de la propriété sélectionnée à une pluralité de fréquences de signal (*f*) dans une plage de fréquences de signal ; et

détermination de la fréquence de résonance ($f_0$) et/ou du facteur de qualité sur la base de la propriété sélectionnée.

3. Procédé selon la revendication 1 ou 2, comprenant les étapes de :

fourniture d'un porte-échantillon (3) comprenant un espace de support (5) pour porter un échantillon comprenant une particule (9) dans un milieu fluide (11) ;

fourniture d'un signal d'excitation, ayant une fréquence de signal (*f*), une amplitude de signal (a) et une puissance de signal (P), au porte-échantillon (3) générant une onde acoustique dans le porte-échantillon (3) pour appliquer une force acoustique (F) à la particule (9), l'onde ayant une fréquence ; et

détermination d'une fréquence de résonance acoustique ($f_0$) du porte-échantillon ;

dans lequel le procédé comprend en outre les étapes de :

détermination d'une différence de fréquence entre la fréquence de signal (*f*) et la fréquence de résonance ($f_0$), et

fourniture d'un signal de rétroaction pour ajuster la fréquence de signal en fonction de la différence de fréquence, et l'étape supplémentaire d'ajustement de la fréquence de signal sur la base du signal de rétroaction.

4. Procédé selon la revendication 3, comprenant la superposition d'une fréquence de modulation ($f_m$) sur la fréquence de signal ($f$), fournissant ainsi une fréquence de signal modulée,

dans lequel l'étape de détermination d'une différence de fréquence entre la fréquence de signal ($f$) et la fréquence de résonance ($f_0$) comprend la détermination de la différence de fréquence par rapport à la fréquence de signal modulée et à la fréquence de résonance ($f_0$), et
dans lequel le procédé comprend en outre :

l'ajustement de la fréquence de modulation ($f_m$) et/ou de la fréquence de signal (f) en fonction de la différence de fréquence, et/ou
l'ajustement de la fréquence de modulation ($f_m$) et/ou de la fréquence de signal (f) sur la base du signal de rétroaction.

5. Procédé selon une quelconque revendication précédente, comprenant les étapes de :

fourniture d'un porte-échantillon (3) comprenant un espace de support (5) pour porter une particule (9) dans un milieu fluide (11) ;
fourniture d'un signal d'excitation répétitif, éventuellement périodique, ayant une fréquence de signal ($f$), une amplitude de signal (a) et une puissance de signal (P), au porte-échantillon (3) générant une onde acoustique dans le porte-échantillon pour appliquer une force acoustique *(F)* à la particule dans une première direction, l'onde ayant une fréquence ($f$) ;
dans lequel le procédé comprend en outre, pour au moins une fréquence, la détermination d'une force acoustique (F) dans chacune parmi plusieurs positions dans l'espace de support (5) réparties dans au moins une ou deux directions perpendiculaires à la première direction.

6. Procédé selon une quelconque revendication précédente, comprenant :
le stockage, dans une mémoire (*M*), d'au moins des données parmi :

des données de fréquence représentant des informations de fréquence de résonance du porte-échantillon (3),
des données de facteur de qualité représentant des informations de facteur de qualité du porte-échantillon (3), et
des données de force représentant au moins l'une parmi :

la force acoustique (F) à plusieurs positions dans l'espace de support (5), et la distribution de force spatiale d'au moins une partie de l'espace de support (5) ;
dans lequel la mémoire (M) est comprise dans un support lisible par machine, et
dans lequel le procédé peut comprendre la fourniture, au porte-échantillon (3), de la mémoire (M) et/ou d'un identifiant pour accéder et/ou récupérer, à partir de la mémoire, les données de fréquence et/ou données de facteur de qualité et/ou données de force stockées.

7. Procédé selon une quelconque revendication précédente, comprenant la détermination d'une force acoustique à plusieurs positions dans l'espace de support (5) en parallèle.

8. Procédé selon la revendication 7, comprenant la fourniture, au porte-échantillon (3), d'un échantillon comprenant une pluralité de particules (9) dans un milieu fluide (11),

la fourniture du signal d'excitation au porte-échantillon (3) générant une onde acoustique dans le porte-échantillon (3) et l'application d'une force acoustique à la pluralité de particules (9),
la surveillance du comportement spatiotemporel des particules (9) par rapport à au moins une partie du porte-échantillon (3), et
la détermination d'une force acoustique (F) pour chaque particule (9) sur la base d'au moins une partie du comportement spatiotemporel surveillé de la particule respective.

9. Procédé selon la revendication 7 ou 8, comprenant la fourniture du signal d'excitation pour générer une force acoustique variable dans le temps, par ex. pulsée, et la surveillance du comportement spatiotemporel des particules (9) par rapport à au moins une variation de force acoustique, par ex. au moins une impulsion de force acoustique.

**10.** Procédé selon une quelconque revendication précédente, comprenant les étapes supplémentaires de : fourniture, au porte-échantillon (3), d'une pluralité de particules (9) dans un milieu fluide (11), et la détermination d'une taille d'au moins certaines des particules.

**11.** Procédé selon la revendication 10, comprenant l'un ou plusieurs parmi :

- la pluralité de particules (9) ayant une distribution de taille avec une taille moyenne et un écart-type de moins de 10 % de la taille moyenne ;
- les particules (9), qui sont sphériques, ayant une taille diamétrale moyenne dans une plage de 5 à 25 micromètres ;
- les particules (9) ayant une distribution de densité avec une densité moyenne et un écart-type de moins de 10 % de la densité moyenne ; et
- **les particules** (9) ayant une densité moyenne qui diffère d'une densité moyenne du fluide d'échantillon dans l'espace de support de 2 à 10 %.

**12.** Procédé selon une quelconque revendication précédente, dans lequel le procédé comprend en outre, pour au moins une fréquence ($f$),

l'application de la force acoustique (F) dans une première direction et la détermination d'une force acoustique (F) dans chacune parmi plusieurs positions dans l'espace de support (5) réparties dans au moins une ou deux directions perpendiculaires à la première direction ; la détermination, pour au moins une partie du porte-échantillon (3), d'au moins l'un parmi :

- une force moyenne des forces acoustiques déterminées associées à cette partie du porte-échantillon (3),
- un écart-type des forces acoustiques déterminées associées à cette partie du porte-échantillon (3),
- une différence entre une force acoustique déterminée et la force moyenne ; et
- une valeur de corrélation rapportant la force moyenne au facteur de qualité (Q) ; et

la détermination, sur la base d'au moins l'une parmi la force moyenne, la différence, l'écart-type et la valeur de corrélation, de l'adéquation du porte-échantillon (3) pour une utilisation dans un procédé de manipulation d'une particule (9), en particulier pour une utilisation ultérieure et/ou répétée dans le procédé selon une quelconque revendication précédente.

**13.** Procédé comprenant la réalisation du procédé selon une quelconque revendication précédente sur une pluralité de porte-échantillons (3), comportant, pour chaque porte-échantillon (3) de la pluralité de porte-échantillons (3), au moins les étapes de :

détermination d'un facteur de qualité (Q) pour le porte-échantillon (3) respectif par rapport à la fréquence de résonance ($f_0$) du porte-échantillon (3) ; et
détermination d'au moins l'une parmi une force acoustique, une force acoustique moyenne dans au moins une partie du porte-échantillon (3) respectif, et une valeur de rendement ($\eta$), dans lequel la valeur de rendement ($\eta$) est définie comme étant la moyenne de la force acoustique ;
le procédé comprenant en outre l'étape de détermination d'une relation de corrélation entre les facteurs de qualité (Q) ainsi déterminés et l'au moins une parmi les forces acoustiques, les forces acoustiques moyennes et les valeurs de rendement ($\eta$).

**14.** Procédé selon la revendication 13, comprenant

la fourniture d'un porte-échantillon (3) supplémentaire, la réalisation du procédé selon une quelconque clause précédente à l'aide du porte-échantillon (3) supplémentaire comprenant la détermination d'un facteur de qualité (Q) pour le porte-échantillon (3) supplémentaire par rapport à sa fréquence de résonance ($f_0$), et
la détermination d'au moins l'une parmi une force acoustique, une force acoustique moyenne dans au moins une partie du porte-échantillon (3) supplémentaire et une valeur de rendement ($\eta$) ;
dans lequel le procédé comprend en outre la détermination de l'adéquation du porte-échantillon (3) supplémentaire pour une utilisation supplémentaire sur la base d'une relation entre la relation de corrélation et ainsi le facteur de qualité (Q) déterminé du porte-échantillon supplémentaire et l'au moins une parmi la force acoustique, la force acoustique moyenne et la valeur de rendement ($\eta$).

**15.** Procédé selon une quelconque revendication précédente, comprenant la manipulation d'une particule comprenant

la fourniture d'une seconde particule (9) dans un fluide d'échantillon (11) dans l'espace de support (5) du porte-échantillon (3), éventuellement d'un second échantillon,

la fourniture d'un second signal d'excitation, ayant une seconde fréquence de signal (f), une seconde amplitude de signal (a) et une seconde puissance de signal (P), au porte-échantillon (3) générant une seconde onde acoustique dans le porte-échantillon pour appliquer une seconde force acoustique (F) à la particule, la seconde onde ayant une seconde fréquence ; et

la détermination d'une force acoustique (F) sur la seconde particule (9) sur la base d'au moins l'un parmi :

le facteur de qualité (Q) du porte-échantillon (3), et

lorsque prise en dépendance de la revendication 5, la force acoustique à une position dans l'espace de support (5) au niveau ou près d'une position de la seconde particule (9), et/ou la distribution de force spatiale dans au moins une partie du porte-échantillon (3), et,

lorsque prise en dépendance de la revendication 13, la relation de corrélation.

Fig. 2A

Fig. 2

Fig. 1

Fig. 3

Fig. 3A

EP 4 179 308 B1

Fig. 4

Fig. 5

Fig. 6

Lorentzian fit:

$$F(f,f_o,\gamma,a) = \frac{1}{\pi\gamma\left[1+\left(\frac{f-f_0}{\gamma}\right)^2\right]} \cdot a$$

$f$: frequency

$a$: amplitude

$f_0$: frequency at maximum $G$, resonance frequency

$\gamma$: Full Width at Half Maximum of $G$

Fig. 7

Fig. 8

Fig. 9A

Fig. 9B

Fig. 11A

Fig. 11B

Fig. 11C

Fig. 10

Fig. 12

Fig. 13C

Fig. 14

Fig. 13A

Fig. 13B

Fig. 15

# Fabrication/Calibration

fabricate acoustic chips → measure electrical properties of acoustic resonance → select chip based on measured properties → measure force map → select

store → chip database

select: no → reject; yes → select optimal measurement region → store → chip database

# Use

move flow cell to measurement region → determine efficiency in measurement region → calculate driving signal needed to apply specific force on sample → apply signal → correct local forces based on force map → output results

choose measurement parameters

select and load sample and determine sample parameters

monitor electrical properties of acoustic resonance

feedback

Fig. 16

EP 4 179 308 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014200341 A
- WO 2018083193 A
- WO 2019212349 A

**Non-patent literature cited in the description**

- **G. THALHAMMER et al.** Acoustic force mapping in a hybrid acoustic optical micromanipulation device supporting high resolution optical imaging. *Lab Chip*, 2016, vol. 16, 1523
- **V. MARX**. Biophysics: using sound to move cells. *Nature Methods*, 2015, vol. 12 (1), 41
- **H. MULVANA et al.** Ultrasound assisted particle and cell manipulation on-chip. *Adv. Drug Del. Rev.*, 2013, vol. 65 (11-12), 1600
- **M. EVANDER** ; **J. NILSSON**. Acoustofluidics 20: Applications in acoustic trapping. *Lab on a Chip*, 2012, vol. 12, 4667
- **D. KAMSMA**. Acoustic Force Spectroscopy (AFS) - From single molecules to single cells. *PhD-thesis Vrije Universiteit Amsterdam*, ISBN 978-94-028-1009-7
- Acoustofluidics 7: The acoustic radiation force on small particles. **BRUUS, H.** Lab on a Chip. The Royal Society of Chemistry, 2012, 1014-1021